# EUROPEAN PATENT APPLICATION

(11) **EP 4 653 503 A1**
(43) Date of publication of application: **26.11.2025**
(21) Application number: 24766905.4
(22) Date of filing: 22.02.2024
(51) Int. Cl.: C09D 17/00, C09C 1/48, C09D 11/037

(54) **METHOD FOR PRODUCING PIGMENT COMPOSITION, PIGMENT COMPOSITION, INK, AND PRINTED MATERIAL**

(30) Priority: 08.03.2023 JP 2023035397
(71) Applicant: DIC Corporation, Tokyo 174-8520 (JP)
(72) Inventor: MORI, Maiko, Kitaadachi-gun, Saitama 362-8577 (JP); MATSUSHITA, Yuki, Kitaadachi-gun, Saitama 362-8577 (JP); YAMAMOTO, Dai, Kitaadachi-gun, Saitama 362-8577 (JP); NIO, Takahiro, Kitaadachi-gun, Saitama 362-8577 (JP)
(74) Representative: Kraus & Lederer PartGmbB
(86) International application number: PCT/JP2024/006553
(87) International publication number: WO 2024/185534

(57) **Abstract**

Provided is a method for producing a pigment composition containing carbon black, a resin having an acid value, and an aqueous medium, the method including, at least, a first dispersion treatment step and a second dispersion treatment step in this order. The first dispersion treatment step is a step of conducing dispersion in a circulation operation or a pass operation, and the second dispersion treatment step is a step conducted by a media-type dispersing machine, a bead size of beads used in the second dispersion treatment step is from 0.01 to 0.5 mm, and a pigment concentration of the pigment composition upon completion of the second dispersion treatment step is, relative to the total mass of the pigment composition, from 16 to 32 mass%.

## Description

### TECHNICAL FIELD

The present invention relates to a method for producing a pigment composition, a pigment composition, an ink, and a printed material. The present application claims the benefit of and priority to Japanese Patent Application No. 2023-035397, filed in Japan on March 8, 2023, the entire content of which is incorporated herein by reference.

### BACKGROUND ART

Pigment compositions are used for ink for various types of printing such as plate printing and inkjet printing. As a method for producing a pigment composition, there has been known a method of obtaining a pigment composition by treating a raw material composition containing a pigment component and a liquid medium with a dispersing machine.

In particular, a pigment composition used for ink to be used in ink jet printing is required to have a small number of coarse particles from the viewpoint of suppressing clogging of an ejection nozzle at the time of printing and obtaining good discharge stability. To this, it is conceivable to reduce the number of coarse particles by repeatedly subjecting a raw material composition containing a pigment component and a liquid medium to a crushing treatment and/or a cracking treatment. However, an increase in the treatment time leads to a decrease in productivity. Thus, the method for producing a pigment composition is required to efficiently reduce the number of coarse particles.

Patent Document 1 discloses that the number of coarse particles in a pigment composition can be efficiently reduced through wet dispersion by using an in-line rotor-stator-type treatment machine and specifying the raw material composition and the range of the solids content concentration thereof.

In recent years, to reduce environmental loads, products designed to reduce CO₂ throughout the entire product life cycle have been required, and in pigment compositions, higher pigment concentrations are required to reduce transportation energy. As to this, kneading dispersion in which a pigment is dispersed through kneading at a very high solids content concentration is conducted. However, the kneading step tends to have a large workload.

In addition, a centrifugal separation step is conducted as a step of reducing the number of coarse particles. However, the centrifugal separation step consumes time, and waste is increased, resulting in an increase in environmental load. Thus, there has been required a dispersion method capable of reducing the number of coarse particles to such an extent that the centrifugal separation step is not required.

### CITATION LIST

### PATENT DOCUMENT

Patent Document 1: WO 2021/075333

### SUMMARY OF INVENTION

### TECHNICAL PROBLEM

An object of the present invention is to provide a method for producing a pigment composition that can efficiently reduce the number of coarse particles in the pigment composition while reducing the workload, a pigment composition, an ink, and a printed material.

### SOLUTION TO PROBLEM

The inventors of the present invention have conducted intensive studies on a method for producing a pigment composition through wet dispersion capable of achieving both high pigment concentration and efficient reduction of the number of coarse particles, and have found that the number of coarse particles in the pigment composition can be efficiently reduced with a relatively high pigment concentration while reducing the work load in a method for producing a pigment composition containing carbon black, a resin having an acid value, and an aqueous medium, by providing, at least, a first wet dispersion treatment step and a second wet dispersion treatment step in this order, conducting the first dispersion treatment step in a circulation operation or a pass operation, and conducting the second wet dispersion treatment step by a media-type dispersing machine. The present invention has been thus completed.

That is, the present invention provides the following configurations.
[1] A method for producing a pigment composition containing carbon black, a resin having an acid value, and an aqueous medium,
   the method including, at least, a first dispersion treatment step and a second dispersion treatment step in this order,
   wherein the first dispersion treatment step is a step of conducting dispersion in a circulation operation or a pass operation,
   the second dispersion treatment step is a step conducted by a media-type dispersing machine,
   a bead size of beads used in the second dispersion treatment step is from 0.01 to 0.5 mm, and
   upon completion of the second dispersion treatment step, a pigment concentration of the pigment composition is, relative to a total mass of the pigment composition, from 16 to 32 mass%.
[2] The method for producing a pigment composition according to [1], the method further including, after the second dispersion treatment step, a third dispersion treatment step, the third dispersion treatment step being a step conducted by a media-type dispersing machine.
[3] The method for producing a pigment composition according to [1], wherein the first dispersion treatment step is a step conducted by a rotor-stator-type treatment machine.
[4] The method for producing a pigment composition according to [1], wherein the pigment composition further contains an anti-foaming agent.
[5] A pigment composition produced by the method according to any one of [1] to [4].
[6] An ink, including the pigment composition according to [5].
[7] A printed material, including the ink according to [6].

### ADVANTAGEOUS EFFECTS OF INVENTION

The present invention can provide a method for producing a pigment composition that can efficiently reduce the number of coarse particles in the pigment composition while reducing the workload, a pigment composition, an ink, and a printed material.

### BRIEF DESCRIPTION OF DRAWINGS

FIGS. 1(A) and 1(B) are a schematic axial sectional view and a schematic radial sectional view, respectively, illustrating an example of a rotor-stator-type treatment machine used in a method for producing a pigment composition according to an embodiment of the present invention.
FIGS. 2(A) to 2(C) are schematic side views illustrating alternative examples of the stator in FIG. 1.
FIG. 3 is a partially enlarged schematic diagram for describing a crushing treatment or a cracking treatment conducted by the rotor-stator-type treatment machine in FIG. 1.

### DESCRIPTION OF EMBODIMENTS

Hereinafter, embodiments of the present invention will be described in detail. The present invention is not limited to the following embodiments, and various alternatives can be made within the scope of the present invention.

In the present specification, a numerical range with "to" indicates a range including numerical values described before and after "to" as a minimum value and a maximum value, respectively. In a numerical range described in stages in the present specification, the upper limit value, or the lower limit value of the numerical range of a certain stage can be freely combined with the upper limit value or the lower limit value of the numerical range of another stage. In a numerical range described in the present specification, the upper limit value or the lower limit value of the numerical range may be replaced with a value presented in Examples. "A or B" only needs to include either A or B, and may include both A and B. The materials exemplified in the present specification can be used singly or in combination of two or more thereof unless otherwise specified. As to a content of each component in a composition, when a plurality of substances applicable to each of the components in the composition are present, the content of each component in the composition means the total amount of the plurality of substances present in the composition, unless otherwise specified. The term "step" includes not only an independent step, but also a step that cannot be clearly distinguished from another step when the anticipated action of the step is achieved. "(Meth)acrylic acid" is a generic term for acrylic acid and methacrylic acid corresponding thereto, and the same applies to other similar expressions such as "(meth)acrylate". Crushing means, for example, a treatment of crushing a solid mass. Cracking means, for example, a treatment of loosening an aggregate.

### Method for Producing Pigment Composition

A method for producing a pigment composition according to the present embodiment is a method for producing a pigment composition containing carbon black, a resin having an acid value, and an aqueous medium, the method including, at least, a first dispersion treatment step and a second dispersion treatment step in this order.

The pigment composition produced by the production method according to the present embodiment may be used for producing an ink or may be used as an ink. The pigment composition according to the present embodiment can be used, for example, as a pigment composition of a printing ink (for example, inkjet printing ink).

The pigment composition before the first dispersion treatment step in the present embodiment may be referred to as a raw material composition, and the pigment composition can contain the same type of component as the raw material composition. The raw material composition subjected to a dispersion treatment step may be referred to as a mixture (pigment composition), and the mixture (pigment composition) subjected to the second dispersion treatment step is the pigment composition produced by the production method of the present invention. When a third dispersion treatment step is included, the mixture (pigment composition) subjected to the third dispersion treatment step is the pigment composition produced by the production method of the present invention. When a solid-liquid mixing step is included, the raw material composition subjected to the solid-liquid mixing step may also be referred to as a raw material composition. The term "pigment composition" may refer to all of a raw material composition, a mixture (pigment composition), and a pigment composition.

### First Dispersion Treatment Step

The first dispersion treatment step is a step of conducting dispersion in a circulation operation or a pass operation.
The step of conducting dispersion in a circulation operation refers to a step of conducting dispersion by circulating a slurry as a raw material composition between a holding tank and a dispersing machine, which is clearly different from a step of conducting dispersion in a batch operation. The step of conducting dispersion in the circulation operation has good workability and thus is suitable for a slurry that is difficult to be crushed or dispersed and takes a long treatment time. In addition, since the dispersion process progresses with the lapse of time, it is easy to control the particle size and to automate the operation, and it is also easy to check the situation during the operation and to add optional components to the raw material composition.
The step of conducting dispersion in a pass operation refers to a step in a so-called catch ball method using a dispersing machine and a plurality of dispersion tanks A and B, the method including conducting a dispersion treatment on the pigment composition in the dispersion tank A, placing the pigment composition into another dispersion tank B, once treating the entire amount of the pigment composition in the dispersion tank A, conducting the same treatment on the pigment composition after placing the pigment composition from the dispersion tank B to the dispersion tank A, then moving the pigment composition from the dispersion tank A to the dispersion tank B, and then repeating the treatment.
The first dispersion treatment step does not include a solid-liquid mixing step or the like that does not greatly contribute to the dispersion of the pigment composition. Specifically, a step in which the pigment particle size in the pigment composition does not change by 5% or more does not correspond to the first dispersion treatment step.

The dispersing machine used in the first dispersion treatment step is not particularly limited as long as the composition is dispersed in a circulation operation or a pass operation, and examples thereof include a high-pressure homogenizer, a media-type dispersing machine, a ball mill, an attritor, a sand mill, a sand grinder, a dyno mill, a disperser mat, an SC mill, a spike mill, an agitator mill, a rotor-stator-type treatment machine, an ultrasonic homogenizer, and a nanomizer.
Among these, as the dispersing machine used in the first dispersion treatment step, a rotor-stator-type treatment machine and a media-type dispersing machine are preferably used.

### Rotor-stator-type Treatment Machine

The rotor-stator-type treatment machine includes a rotor having a rotatable blade portion and a stator having a wall portion disposed on the outer peripheral side of the blade portion. The treatment machine may be any of a crushing machine, a cracking machine, a dispersing machine, and the like. The rotor and the stator may be of any commercially available shape, and may be of different shapes or the same shape. Since the transportability, shear rate (pulverization ability), heat generation amount at the time of pulverization, and the like of the raw material composition vary depending on the shape, the shape combination can be selected according to the properties of the raw material composition. Usually, a rotor having a large number of teeth is likely to pulverize the raw material composition, and the amount of heat generation increases.

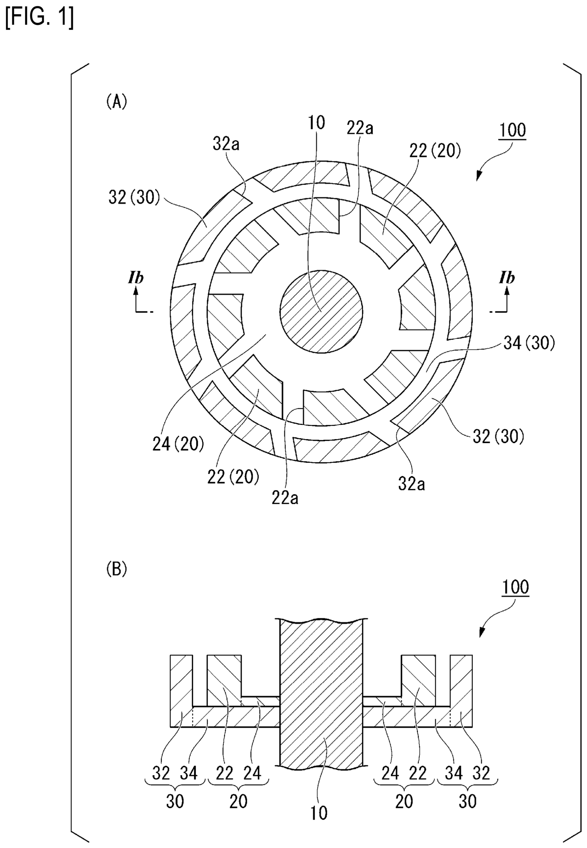

FIG. 1(A) and FIG. 1(B) are a schematic axial sectional view and a schematic radial sectional view, respectively, illustrating an example of a rotor-stator-type treatment machine used in the method for producing a pigment composition according to the present embodiment. A rotor-stator-type treatment machine 100 illustrated in FIG. 1 includes a central shaft 10, a rotor 20, and a stator 30. Examples of constituent materials of the central shaft 10, the rotor 20, and the stator 30 include metal materials and ceramics.

The central shaft 10 is an elongated member and extends, for example, in a vertical direction. The central shaft 10 supports the rotor 20 and the stator 30.

The rotor 20 includes a ring-shaped (for example, annular) blade portion 22 extending in a longitudinal direction of the central shaft 10 on the outer peripheral portion of the rotor 20, and a connection portion 24 connecting the blade portion 22 and the central shaft 10. The blade portion 22 is rotatable about the central shaft 10. The blade portion 22 has an opening (through hole) 22a penetrating the blade portion 22, and for example, has a plurality of openings 22a at intervals (for example, at equal intervals) along a circumferential direction of the blade portion 22. The opening direction of the opening 22a may be inclined with respect to a radial direction. The end of the opening 22a on the upper side in the vertical direction may be open without a member constituting the rotor 20. The number, disposition, and shape of the opening 22a are not particularly limited.

The disposition and shape of the blade portion in the rotor of the rotor-stator-type treatment machine are not particularly limited. For example, the blade portion is not limited to a ring-shaped member disposed on the outer peripheral portion of the rotor, but may have a shape extending from a central portion to an outer peripheral portion of the rotor. The rotor may have a plurality of blade portions having a shape extending from the central portion to an outer peripheral portion of the rotor. The blade portion having a shape extending from the central portion to the outer peripheral portion of the rotor may have a streamline shape.

The stator 30 includes a ring-shaped (for example, annular) wall portion 32 extending in a longitudinal direction of the central shaft 10 at the outer peripheral portion of the stator 30, and a connection portion 34 connecting the wall portion 32 and the central shaft 10. The wall portion 32 is disposed on the outer peripheral side of the blade portion 22 in the rotor-stator-type treatment machine 100. The wall portion 32 has an opening (through hole) 32a penetrating the wall portion 32, and for example, has a plurality of openings 32a at intervals (for example, at equal intervals) along a circumferential direction of the wall portion 32. The opening direction of the opening 32a may be inclined with respect to a radial direction.

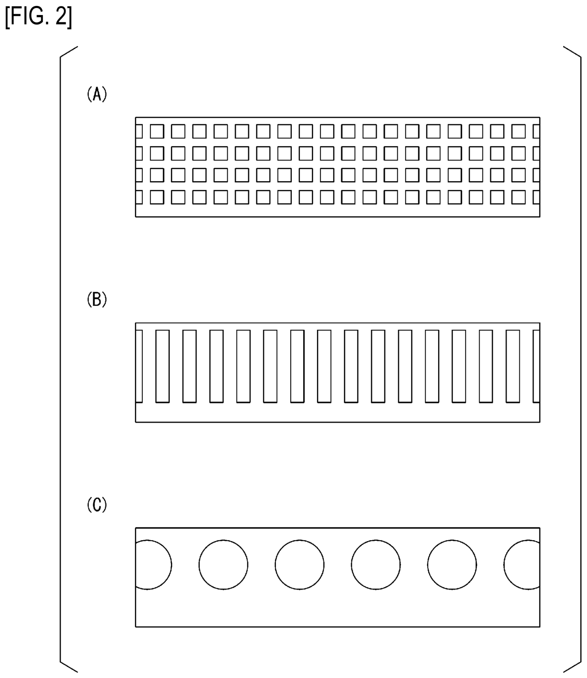

The number, disposition, and shape of the openings of the wall portion in the stator are not particularly limited. FIG. 2(A) to FIG. 2(C) are schematic side views illustrating alternative examples of the stator (wall portion of stator) in FIG. 1. Examples of the wall portion of the stator include a wall portion (FIG. 2(A)) having openings (for example, a substantially rectangular opening having a square shape or the like) disposed in an array, a wall portion (FIG. 2(B)) having a plurality of rectangular openings disposed in a line, and a wall portion (FIG. 2(C)) having a plurality of circular (for example, perfect circular) openings disposed in a line. Examples of the shape of the opening include a substantially rectangular shape (square shape, rectangular shape, or the like) and a circular shape (perfect circular shape, elliptical shape, or the like).

The stator may have a plurality of ring-shaped (for example, annular) wall portions extending in the longitudinal direction of the central shaft at the outer peripheral portion of the stator. For example, the stator may include the above-described wall portion 32 as a first wall portion, may include a second wall portion disposed on the outer peripheral side of the first wall portion in the rotor-stator-type treatment machine, and may further include a third wall portion disposed on the outer peripheral side of the second wall portion in the rotor-stator-type treatment machine. The number of wall portions is not particularly limited, and it may be four or more.

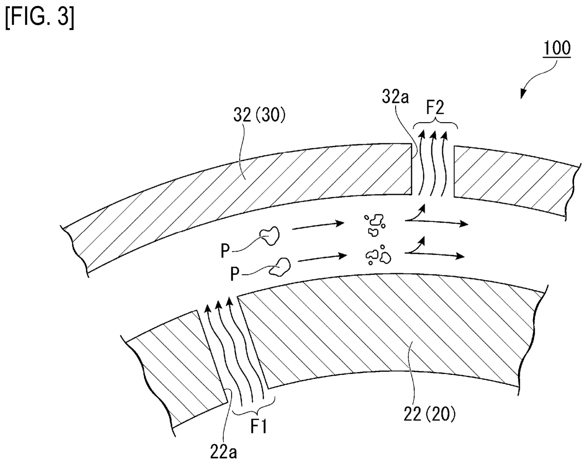

FIG. 3 is a partially enlarged schematic diagram for describing a crushing treatment or a cracking treatment conducted by the rotor-stator-type treatment machine 100 in FIG. 1, illustrating a part of an outer peripheral portion of the rotor-stator-type treatment machine 100 in an enlarged manner. In the rotor-stator-type treatment machine 100, for example, after a raw material composition containing a pigment component and a liquid medium is supplied around the central shaft 10, the raw material composition reaches a space between the blade portion 22 and the wall portion 32 of the stator 30 via the opening 22a of the blade portion 22 of the rotor 20 (in the drawing, flow path F1) as illustrated in FIG. 3. Then, in this space, a shearing force caused by the rotational motion of the blade portion 22 is applied to coarse particles P (solids content), whereby the coarse particles P are crushed or cracked. Thereafter, a part of the composition containing the crushed or cracked particles flows out to the outer peripheral side of the wall portion 32 via the opening 32a of the wall portion 32 (in the drawing, flow path F2), and the remaining part of the composition further advances in the space between the blade portion 22 and the wall portion 32, and the particles are further crushed or cracked by the shearing force. The pigment component in the raw material composition containing a pigment component and a liquid medium is thus crushed or cracked through the crushing treatment or the cracking treatment of the rotor-stator-type treatment machine 100.

From the viewpoint of easily reducing the number of coarse particles efficiently, the viewpoint of easily reducing the particle size of the solids content after the treatment, the viewpoint of easily reducing the viscosity of the pigment composition, and the viewpoint of easily obtaining excellent storage stability in the pigment composition, the shear rate (pulverization ability) given by the treatment unit composed of the rotor and the stator is preferably 50000 s⁻¹ or more, more preferably 75000 s⁻¹ or more, still more preferably 90000 s⁻¹ or more, particularly preferably 100000 s⁻¹ or more, further preferably 120000 s⁻¹ or more, further preferably 150000 s⁻¹ or more, and further preferably 170000 s⁻¹ or more. The upper limit value of the shear rate may be, for example, 400000 s⁻¹ or less, or 250000 s⁻¹ or less. From these viewpoints, the shear rate is preferably 50000 to 400000 s⁻¹. The shear rate [s⁻¹] can be obtained by dividing the peripheral speed [m/s] of the blade portion of the rotor by the distance [m] between the blade portion and the wall portion of the stator.

The rotor-stator-type treatment machine may have a plurality of treatment units (crushing portion or cracking portion) configured by the rotor and the stator. By allowing the raw material composition to flow from a treatment unit having a low shear rate to a treatment unit having a high shear rate, clogging is easily suppressed, and thus the number of coarse particles is easily reduced efficiently. The rotor-stator-type treatment machine may include a plurality of treatment units along a central shaft extending in a vertical direction (may include multiple treatment units). When the rotor-stator-type treatment machine has a plurality of treatment units along the central shaft, it is preferable to dispose a treatment unit having a higher shear rate toward the lower side in the vertical direction from the viewpoint of efficiently reducing the number of coarse particles.

The treatment temperature when the first dispersion treatment step of the present invention is conducted by a rotor-stator-type treatment machine is preferably in the following ranges, from the viewpoint of easily reducing the number of coarse particles efficiently, from the viewpoint of easily shortening the time for obtaining a pigment composition having a desired solids content physical property (the number of coarse particles, particle size, or the like) in the second treatment step, and from the viewpoint of easily improving the adsorption rate of a resin to the pigment component by promoting the dissolution of the resin when a resin having an acid value is used and easily obtaining excellent storage stability. The temperature is preferably 25°C or more, more preferably 30°C or more, still more preferably 40°C or more, particularly preferably 50°C or more, further preferably 55°C or more, and further preferably 60°C or more. The temperature is preferably 80°C or less, more preferably 75°C or less, still more preferably 70°C or less, particularly preferably 65°C or less, and further preferably 60°C or less. From these viewpoints, the temperature is preferably 25 to 80°C, more preferably 50 to 80°C, and still more preferably from 60 to 80°C.

As the rotor-stator-type treatment machine, an in-line-type treatment machine can be used. In the in-line-type treatment machine, the raw material composition is continuously supplied, and for example, the treatment machine can be installed in the middle of a treatment path (for example, a crushing treatment path and a cracking treatment path. For example, a pipe), and the raw material composition can be continuously treated (crushing treatment or cracking treatment). In the in-line-type treatment machine, the entire raw material composition is forcibly caused to pass through the treatment machine. Thus, it is easy to uniformly conduct treatment on the entire raw material composition in a short time as compared with a case where a batch-type treatment machine that mainly conducts treatment only on the periphery of the rotor is used alone. According to the in-line-type treatment machine, the number of coarse particles is easily reduced efficiently. Thus, pipe clogging in the treatment machine in the second treatment step is easily suppressed. In particular, when an in-line-type treatment machine is used as the rotor-stator-type treatment machine, the number of coarse particles having a size of 0.5 µm or more contained in the finally obtained pigment composition can be more effectively reduced as compared with the case where a batch-type treatment machine is used alone. The in-line-type treatment machine can easily reduce the viscosity of the pigment composition.

Examples of the rotor-stator-type treatment machine include an equipment name "magic LAB" (in-line type, maximum peripheral speed: 41 m/s, maximum rotation speed: 26000 rpm) available from IKA; equipment name "VERSO" (high-shear in-line mixer, in-line type, maximum peripheral speed: 20 m/s, maximum rotation speed: 10000 rpm) available from Silverson Nippon Ltd.; equipment name "L5M-A" (batch type, maximum peripheral speed: 20 m/s, maximum rotation speed: 10000 rpm) available from Silverson Nippon Ltd. As the treatment machine available from IKA, a treatment machine including a UTR module (ULTRA-TURRAX), a DR module (DISPAX-REACTOR), an MK module, an MKO module, and a CMX module can be used. The DR module has three stages of treatment units (stages) including a rotor and a stator, and the shear rate can be adjusted by combining the rotor and the stator. Thus, the number of coarse particles can be efficiently reduced. For example, by using treatment units of 2P/4M/6F in order from the upper side in a vertical direction, it is possible to dispose a treatment unit having a higher shear rate toward the lower side in the vertical direction. The MK module has a single-stage treatment unit (stage) including a rotor and a stator, and can be adjusted to any shear rate by rotating a handle on the outer circumference of the stator from an initial position to any angle. Thus, it is easy to efficiently reduce the number of coarse particles to a desired number. For example, by rotating the handle at an angle of 275°, the distance between the blade portion and the wall portion of the stator can be set to 0.1 mm.

As the rotor-stator-type treatment machine, one having a rotation speed in the range of 1000 to 30000 rpm is preferably used, one having a rotation speed in the range of 3000 to 25000 rpm is more preferably used, and the use of one having a rotation speed in the range of 8000 to 20000 rpm is particularly preferable from the viewpoint of easily reducing the number of coarse particles efficiently, the viewpoint of easily reducing the particle size of the solids content after treatment, the viewpoint of easily reducing the viscosity of the pigment composition, and the viewpoint of easily obtaining excellent storage stability in the pigment composition.

As the rotor-stator-type treatment machine, a rotor-stator-type treatment machine having a maximum peripheral speed in the range of 5 m/s to 50 m/s is preferably used, a rotor-stator-type treatment machine having a maximum peripheral speed in the range of 10 m/s to 40 m/s is more preferably used, and a rotor-stator-type treatment machine having a maximum peripheral speed in the range of 15 m/s to 35 m/s is particularly preferably used from the viewpoint of easily reducing the number of coarse particles efficiently, the viewpoint of easily reducing the particle size of the solids content after treatment, the viewpoint of easily reducing the viscosity of the pigment composition, and the viewpoint of easily obtaining excellent storage stability in the pigment composition.

### Media-type Dispersing Machine

A media-type dispersing machine refers to an apparatus capable of continuously feeding a slurry containing particles by a pump into a cylindrical container called a vessel filled with beads as crushing media, stirring the beads by rotating an agitator as a stirring member, and crushing and dispersing the particles in the vessel through a collision force, a shearing force, or the like. The machine is also called a bead mill. A separator is provided at an outlet of the media-type dispersing machine, and only the slurry is discharged from the outlet.
The vessel is preferably made of a heat-resistant material such as alumina, alumina zirconia, or silicon nitride. The agitator is preferably made of a ceramic such as zirconia, silicon nitride, or alumina which is an abrasion resistant material. The separator may be a gap-type separator, a screen-type separator, a centrifugal-type separator, or a centrifugal screen type separator. When microbeads having a bead diameter of 0.2 mm or less are used, the separator is preferably a centrifugal type separator or a centrifugal screen type separator.

It is preferable that the agitator has a plurality of stirring disks and has a mechanism for forming turbulence in a space generated between adjacent stirring disks. This increases the crushing ability of the beads and makes the beads less likely to segregate at the outlet of the vessel.

The slurry discharged from the outlet of the vessel is returned to the tank through the pump and fed into the vessel again from a supply port. The inside of the tank is preferably stirred.

A jacket is preferably provided on the outer peripheral side of the vessel and the tank at a distance from the vessel and the tank. Cooling water, hot water, or the like can pass through the jacket, and the temperature in the vessel can be adjusted.

Beads as crushing media are filled in the vessel. As the beads, granular beads having a diameter from about 0.01 to 2 mm can be used. The bead size is appropriately selected according to the maximum particle size of the pigment particles and the pigment particle size to be obtained as a dispersion result. When a media-type dispersing machine is used in the first dispersion treatment step of the present invention, it is preferable to use beads of 0.4 to 3.0 mm, it is more preferable to use beads of 0.4 to 1.2 mm, and it is still more preferable to use beads of 0.5 to 1.0 mm. By using the media-type dispersing machine filled with beads having a bead size in such a range in the first dispersion treatment step, clogging of the powder and the like can be suppressed, and stable operation can be conducted, and in the next step (second dispersion treatment step), the number of coarse particles can be reduced while obtaining a desired dispersion particle size in a short time.

As the material of the beads, zirconia, alumina, glass, special glass, silica-based ceramic beads, silicon nitride beads, and the like can be used, and the specific gravity and brittleness thereof can be selected as an index according to the application. In the production method of the present invention, zirconia beads are preferably used, with which carbon black particles can be efficiently dispersed, and contamination of the pigment composition due to bead abrasion can also be suppressed. The bead filling rate in the vessel is preferably about 50 to 90% of the vessel volume. The rate may be set in consideration of wear and heat generation of the media-type dispersing machine member. When beads of 0.4 to 3.0 mm are used in the first dispersion treatment step, the bead filling rate is preferably 70 to 88%, more preferably 80 to 85% of the vessel volume. By setting the bead filling rate within such a range, heat generation and wear can be suppressed while sufficiently maintaining the kinetic energy transfer efficiency, and stable operation can be realized.

As the peripheral speed of the agitator increases, the crushing/dispersing speed tends to increase. When a media-type dispersing machine is used in the first dispersion treatment step, the peripheral speed of the agitator is preferably set to 5 to 16 m/s, more preferably set to 8 to 15 m/s, and still more preferably set to 11 to 15 m/s. When the peripheral speed of the agitator is within such a range, a desired dispersion result can be obtained in a short time, which is preferable.

The liquid feeding flow rate in the media-type dispersing machine is determined depending on the pump capacity. The rate may be appropriately adjusted according to the vessel volume, the bead size, the amount of the pigment composition to be treated, the pigment concentration and the solids content concentration of the pigment composition. It is preferable to adjust the liquid feeding flow rate such that 10 times or more the amount of the pigment composition to be treated can be treated within any set dispersing time. For example, when it is desired to produce 10 kg of a pigment composition in 60 minutes, the rate may be set to 10 kg × 10/60 minutes = 1.7 kg/min, and when it is desired to produce 100 kg of a pigment composition in 60 minutes, the rate may be set to 100 kg × 10/60 minutes = 16.7 kg/min.
When beads of 0.4 to 3.0 mm are used in the first dispersion treatment step, the liquid feeding flow rate is preferably 2 to 10 kg/min, more preferably 4 to 8 kg/min. By setting the liquid feeding flow rate within such a range, a pigment composition that can be applied to the next step (second dispersion treatment step) can be obtained in a short time.
In addition, to stably operate the media-type dispersing machine, it is preferable to adjust the liquid feeding flow rate to 0.15 MPa or less as measured with a pressure gauge installed at the outlet of the dispersing machine.

The treatment temperature when the first dispersion treatment step of the present invention is conducted with a media-type dispersing machine is preferably in the following ranges, from the viewpoint of easily reducing the number of coarse particles efficiently, from the viewpoint of easily shortening the time for obtaining a pigment composition having a desired solids content physical property (the number of coarse particles, particle size, or the like) in the second dispersion treatment step, and from the viewpoint of easily improving the adsorption rate of a resin to the pigment component by promoting the dissolution of the resin when a resin having an acid value is used and easily obtaining excellent storage stability. The temperature is preferably 10°C or more, more preferably 15°C or more, still more preferably 20°C or more, particularly preferably 25°C or more, and further preferably 30°C or more. The temperature is preferably 60°C or less, more preferably 55°C or less, still more preferably 50°C or less, particularly preferably 45°C or less, and further preferably 40°C or less. From these viewpoints, the temperature is preferably 10 to 60°C, more preferably 25 to 50°C, still more preferably 25 to 40°C, and particularly preferably 30 to 40°C. The temperature is preferably adjusted by flowing cold water or warm water through the vessel and the jacket on the outer circumference of the tank.

The first dispersion treatment step of the present invention is a step of conducting dispersion in a circulation operation or a pass operation. When dispersion is conducted in a circulation operation, the particle size continuously decreases with time. When a media-type dispersing machine is used in the first dispersion treatment step, the dispersing time is not particularly limited as long as the first dispersion treatment step is terminated when sampling is conducted at a certain interval and the particle size and/or the number of coarse particles of the obtained sample reaches a target. From the viewpoint of performing an efficient dispersion step, it is preferable to change and adjust the flow rate, vessel volume, peripheral speed, and the like such that the dispersing time in the first dispersion treatment step ends in 30 to 180 minutes. When the dispersion is conducted in a pass operation in the first dispersion treatment step of the present invention, it is preferable to adjust the condition such that the number of passes is about 10.

Examples of the media-type dispersing machine include, but are not limited to, "Mugen Flow" series and "Star Mill" series available from Ashizawa Finetech Ltd., "Neos" series available from NETZSCH, "MicroMedia" series available from Bühler, "DYNO-MILL" series available from Shinmaru Enterprises Corporation, "PicoMill" series, "Ecomill" series, "Revomill" series, and "Nanomill" series available from ASADA IRON WORKS CO., LTD., and "SC Mill" series available from NIPPON COKE & ENGINEERING CO., LTD.

Upon completion of the first dispersion treatment step, the pigment concentration of the pigment composition of the present invention is not particularly limited. When the first dispersion treatment step is dispersion with a rotor-stator-type treatment machine, the pigment concentration is, relative to the total mass of the pigment composition, preferably from 20 to 35 mass%. When the first dispersion treatment step is dispersion with a media-type dispersing machine, the pigment concentration is preferably 18 to 25 mass%. When the pigment concentration is in such a range, the viscosity of the pigment composition tends to be in an appropriate range for each dispersing machine, and the dispersion efficiency is maintained.

The raw material supply unit in the apparatus for producing the pigment composition according to the present embodiment is not particularly limited as long as the raw material composition can be supplied to a dispersing machine such as a rotor-stator-type treatment machine or a media-type dispersing machine. The raw material supply unit may be a pipe, pump, or the like for supplying the raw material supply unit.

### Second Treatment Step

The second dispersion treatment step of the present invention is a step of crushing or cracking the pigment component in the mixture (pigment composition) obtained in the first dispersion treatment step. The second dispersion treatment step is a step with a media-type dispersing machine. The bead size of beads used in the second dispersion treatment step is from 0.01 to 0.5 mm.

As the media-type dispersing machine used in the second dispersion treatment step, the media-type dispersing machine used in the first dispersion treatment step can be used, and zirconia beads are preferably used as the material of the beads, with which the carbon black particles can be efficiently dispersed, and contamination of the pigment composition due to bead abrasion can also be suppressed.

When the first dispersion treatment step is dispersion with a rotor-stator-type treatment machine, the mixture (pigment composition) dispersed in the rotor-stator-type treatment machine is further dispersed with a media-type dispersing machine. When the first dispersion treatment step is dispersion with a media-type dispersing machine, the dispersion in the second dispersion treatment step is conducted by a media-type dispersing machine under conditions different from those of the first dispersion treatment step. Specifically, in the first dispersion treatment step and the second dispersion treatment step, it is preferable to conduct dispersion under conditions of different bead sizes. That is, it is preferable that the bead size of beads used in the second dispersion treatment step is from 0.01 to 0.5 mm, and the bead size of beads used in the first dispersion treatment step is different from the bead size of beads used in the second dispersion treatment step, in particular, the bead size of beads used in the first dispersion treatment step is larger than the bead size of beads used in the second dispersion treatment step.
The relationship between the bead size (D1) of beads used in the first dispersion treatment step and the bead size (D2) of beads used in the second dispersion treatment step is preferably D2/D1 = 0.01 to 0.5, and more preferably from 0.1 to 0.5. When the relationship between D1 and D2 is in such a range, coarse particles can be efficiently reduced.

The bead size of beads used in the second dispersion treatment step is required to be from 0.01 to 0.5 mm, and is preferably from 0.05 to 0.4 mm, more preferably from 0.1 to 0.3 mm. The bead filling rate in the vessel in the second dispersion treatment step is preferably 80 to 95%, more preferably 85 to 92% of the vessel volume. By setting the bead filling rate within such a range, heat generation and wear can be suppressed while sufficiently maintaining the kinetic energy transfer efficiency, and stable operation can be realized.

The peripheral speed of the agitator in the second dispersion treatment step is preferably set to 5 to 16 m/s, more preferably set to 8 to 15 m/s, and more preferably set to 11 to 15 m/s. When the peripheral speed of the agitator is within such a range, a desired dispersion result can be obtained in a short time, which is preferable.

In the second dispersion treatment step, similar to the first dispersion treatment step, the liquid feeding flow rate may be appropriately adjusted according to the vessel volume, the bead size, the amount of the pigment composition to be treated, and the pigment concentration and the solids content concentration of the pigment composition. It is preferable to adjust the liquid feeding flow rate such that 10 times or more the amount of the pigment composition to be treated can be treated within any set dispersing time.
The liquid feeding flow rate in the second dispersion treatment step is preferably in the range of 0.5 to 30 kg/min. In addition, to stably operate the media-type dispersing machine, it is preferable to adjust the liquid feeding flow rate to 0.15 MPa or less as measured with a pressure gauge installed at the outlet of the dispersing machine.

The treatment temperature in the second dispersion treatment step is preferably in the following ranges, from the viewpoint of easily reducing the number of coarse particles efficiently, from the viewpoint of easily shortening the time for obtaining a pigment composition having a desired solids content physical property (the number of coarse particles, particle size, or the like), and from the viewpoint of easily improving the adsorption rate of a resin to the pigment component by promoting the dissolution of the resin when a resin having an acid value is used and easily obtaining excellent storage stability. The temperature is preferably 10°C or more, more preferably 15°C or more, still more preferably 20°C or more, particularly preferably 25°C or more, and further preferably 30°C or more. The temperature is preferably 60°C or less, more preferably 55°C or less, still more preferably 50°C or less, particularly preferably 45°C or less, and further preferably 40°C or less. From these viewpoints, the temperature is preferably from 10 to 60°C, more preferably from 25 to 50°C, and still more preferably from 30 to 40°C. The temperature is preferably adjusted by flowing cold water or warm water through the vessel and the jacket on the outer circumference of the tank.

In the second dispersion treatment step, the dispersing time is not particularly limited, but the second dispersion treatment step may be terminated when sampling is conducted at regular intervals and the particle size and/or the number of coarse particles of the acquired sample reaches a target. From the viewpoint of performing an efficient dispersion step, it is preferable to change and adjust the flow rate, vessel volume, peripheral speed, and the like such that the dispersing time in the second dispersion treatment step ends in from 30 to 180 minutes.

Upon completion of the second dispersion treatment step, the pigment concentration of the pigment composition of the present invention is, relative to the total mass of the pigment composition, from 16 to 32 mass%. The pigment concentration is preferably from 18 to 23 mass%. When the pigment concentration is in such a range, the viscosity of the pigment composition tends to be in an appropriate range, and the dispersion efficiency is maintained. In addition, when the pigment concentration is within such a range, the beads and the pigment can be dispersed in a state where the collision frequency is sufficient. Thus, coarse particles can be effectively crushed or cracked.

### Third Dispersion Treatment Step

The method for producing a pigment composition of the present invention may further include, after the second dispersion treatment step, a third dispersion treatment step. The third dispersion treatment step is preferably a step conducted by a media-type dispersing machine.
In the third dispersion treatment step, dispersion is conducted by a media-type dispersing machine under conditions different from those in the second dispersion treatment step. Specifically, in the second dispersion treatment step and the third dispersion treatment step, it is preferable to conduct dispersion under conditions of different bead sizes. That is, it is preferable that the bead size of beads used in the second dispersion treatment step is from 0.01 to 0.5 mm, and the bead size of beads used in the third dispersion treatment step is different from the bead size of beads used in the second dispersion treatment step, in particular, the bead size of beads used in the third dispersion treatment step is smaller than the bead size of beads used in the second dispersion treatment step.
The relationship between the bead size (D2) of beads used in the second dispersion treatment step and the bead size (D3) of beads used in the third dispersion treatment step is preferably D3/D2 = 0.01 to 0.8, more preferably from 0.1 to 0.5, and still more preferably 0.15 to 0.5. When the relationship between D2 and D3 is in such a range, coarse particles can be efficiently reduced.

The bead size of beads used in the third dispersion treatment step is preferably from 0.01 to 0.3 mm, more preferably from 0.05 to 0.2 mm, and still more preferably from 0.05 to 0.1 mm. The bead filling rate in the vessel in the third dispersion treatment step is preferably from 80 to 95%, more preferably from 85 to 92% of the vessel volume. By setting the bead filling rate within such a range, heat generation and wear can be suppressed while sufficiently maintaining the kinetic energy transfer efficiency, and stable operation can be realized.

The peripheral speed of the agitator in the third dispersion treatment step is preferably set to from 5 to 16 m/s, more preferably set to from 8 to 15 m/s, and more preferably set to from 11 to 15 m/s. When the peripheral speed of the agitator is within such a range, a desired dispersion result can be obtained in a short time, which is preferable.

In the third dispersion treatment step, as in the first dispersion treatment step and the second dispersion treatment step, the liquid feeding flow rate may be appropriately adjusted according to the vessel volume, the bead size, the amount of the pigment composition to be treated, the pigment concentration and the solids content concentration of the pigment composition. It is preferable to adjust the liquid feeding flow rate such that 10 times or more the amount of the pigment composition to be treated can be treated within any set dispersing time.
The liquid feeding flow rate in the third dispersion treatment step is preferably in the range from 0.5 to 25 kg/min. In addition, to stably operate the media-type dispersing machine, it is preferable to adjust the liquid feeding flow rate to 0.15 MPa or less as measured with a pressure gauge installed at the outlet of the dispersing machine.

The treatment temperature in the third dispersion treatment step is preferably in the following ranges, from the viewpoint of easily reducing the number of coarse particles efficiently, from the viewpoint of easily shortening the time for obtaining a pigment composition having a desired solids content physical property (the number of coarse particles, particle size, or the like), and from the viewpoint of easily improving the adsorption rate of a resin to the pigment component by promoting the dissolution of the resin when a resin having an acid value is used and easily obtaining excellent storage stability. The temperature is preferably 10°C or more, more preferably 15°C or more, still more preferably 20°C or more, particularly preferably 25°C or more, and further preferably 30°C or more. The temperature is preferably 60°C or less, more preferably 55°C or less, still more preferably 50°C or less, particularly preferably 45°C or less, and further preferably 40°C or less. From these viewpoints, the temperature is preferably from 10 to 60°C, more preferably from 25 to 50°C, and still more preferably from 30 to 40°C. The temperature is preferably adjusted by flowing cold water or warm water through the vessel and the jacket on the outer circumference of the tank.

In the third dispersion treatment step, the dispersing time is not particularly limited, but the third dispersion treatment step may be terminated when sampling is conducted at regular intervals and the particle size and/or the number of coarse particles of the acquired sample reaches a target. From the viewpoint of performing an efficient dispersion step, it is preferable to change and adjust the flow rate, vessel volume, peripheral speed, and the like such that the dispersing time in the third dispersion treatment step ends in 30 to 180 minutes.

Upon completion of the third dispersion treatment step, the pigment concentration of the pigment composition of the present invention is, relative to the total mass of the pigment composition, preferably from 12 to 32 mass%. The pigment concentration is more preferably from 12 to 23 mass%. When the pigment concentration is in such a range, the viscosity of the pigment composition tends to be in an appropriate range, and the dispersion efficiency is maintained. In addition, when the pigment concentration is within such a range, the beads and the pigment can be dispersed in a state where the collision frequency is sufficient. Thus, coarse particles can be effectively crushed or cracked.

### Solid-liquid Mixing Step

The production method of the present invention may include, before the first dispersion treatment step, a solid-liquid mixing process of wetting carbon black and a resin having an acid value with an aqueous medium. The solid-liquid mixing step is distinguished from the first dispersion treatment step in that it is not a circulation operation or a pass operation, and it is not part of a dispersion step.

A mixing machine used in the solid-liquid mixing process is not particularly limited, and a commercially available stirring apparatus can be used. Examples of the mixing machine include a disper, a three-one motor, a homogenizer, a magnetic stirrer, a line mixer, and a dissolver.
A dispersing machine may also be used as a mixing machine, and in such a case, it is preferable to conduct mixing in a short time, for example, under a condition where carbon black is not dispersed, specifically, under a condition where the particle size of carbon black does not change by 5% or more. In such a case, a high-pressure homogenizer, a paint shaker, a bead mill, a roll mill, a sand mill, a ball mill, an attritor, a basket mill, a sand mill, a sand grinder, a dyno mill, a disperser mat, an SC mill, a spike mill, an agitator mill, an ultrasonic homogenizer, a nanomizer, a dissolver, a disper, a high-speed impeller dispersing machine, a kneader, a planetary mixer, a butterfly mixer, or the like may be used.

### Pigment Composition

The pigment composition contains carbon black, a resin having an acid value, and an aqueous medium. Additives other than these may further be contained. The solids content concentration of the raw material composition that is the pigment composition before the first dispersion treatment step in the present invention, that is, the total concentration of carbon black and the resin having an acid value may be, relative to the total mass of the raw material composition, from 1 to 60 mass%, from 10 to 50 mass%, or from 15 to 40 mass%.

As the carbon black, for example, carbon black produced by a known method such as a contact method, a furnace method, or a thermal method can be used. These types of carbon black can be suitably used for the production of printing inks (for example, inkjet printing inks). One type of carbon black may be used alone, or two or more types thereof may be used in combination.

Examples of the carbon black that can be used include #2300, #980, #960, #995B, #900, #52, #45 L, #45, #40, #33, MA100, MA8, MA7, and the like available from Mitsubishi Chemical Corporation; Regal series, Monarch series, BLACKPEARLS series, and the like available from Cabot Corporation; Color Black FW1, Color Black series, Printex series, Special Black series, NIPEX series, and the like available from Orion Engineered Carbons S.A. In addition, a dry pigment (pigment in a dry powder state) or a wet pigment (pigment in a wet cake state) can be used. It is also possible to use a mixture or a solid solution containing two or more types.

The primary particle size of the carbon black is preferably 30 nm or less, and more preferably 10 to 20 nm from the viewpoint of more effectively suppressing the sedimentation of the pigment component over time. The primary particle size refers to the value of the number average particle size measured using a transmission electron microscope (TEM).

The content of the carbon black is, relative to the total mass of the raw material composition, the mixture (pigment composition), and the pigment composition, preferably from 1 to 50 mass%, more preferably from 10 to 30 mass%, and still more preferably from 15 to 25 mass%. In these cases, moderate fluidity is easily obtained. Thus, efficient and uniform treatment can be conducted in each process, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

Examples of the aqueous medium include water, organic solvents, and mixtures thereof. Examples of water include pure water such as ion-exchanged water, ultrafiltrated water, reverse osmosis water, and distilled water; and ultrapure water. As the water, it is preferable to use water sterilized through ultraviolet irradiation, addition of hydrogen peroxide, or the like from the viewpoint of easily suppressing generation of mold or bacteria when the pigment composition or the ink is stored for a long period of time.
The water is preferably used in the range from, relative to the total mass of the aqueous medium contained in the pigment composition of the present invention, 10 to 90 mass% and is preferably used in the range from 15 to 80 mass%, for producing an aqueous ink.

As the organic solvent, a water-soluble organic solvent is preferably used. The water-soluble organic solvent tends to efficiently wet the surface of the pigment component, and the resin (for example, a neutralized resin) dissolved in water is likely to adsorb to the pigment component. Thus, the time until the desired physical properties are achieved is likely to be shortened.

Examples of the water-soluble organic solvent include glycols such as ethylene glycol, diethylene glycol, triethylene glycol, tetraethylene glycol, propylene glycol, dipropylene glycol, tripropylene glycol, polyethylene glycol, and polypropylene glycol; diols such as butanediol, pentanediol, and hexanediol; glycol esters such as propylene glycol laurate; diethylene glycol ethers such as diethylene glycol monoethyl, diethylene glycol monobutyl, diethylene glycol monohexyl, and carbitol; glycol ethers such as cellosolve containing propylene glycol ether, dipropylene glycol ether, or triethylene glycol ether; alcohols such as methanol, ethanol, isopropyl alcohol, 1-propanol, 2-propanol, 1-butanol, 2-butanol, butyl alcohol, and pentyl alcohol (excluding glycols); lactones such as sulfolane, ester, ketone, and γ-butyrolactone; lactams such as N-(2-hydroxyethyl)pyrrolidone and 2-pyrrolidone; and glycerin and polyalkylene oxide adducts thereof. The water-soluble organic solvent can be used singly or in combination of two or more thereof.

The content of the water-soluble organic solvent is, relative to 100 parts by mass of the pigment component contained in the pigment composition, preferably from 10 to 500 parts by mass, more preferably from 15 to 200 parts by mass, and still more preferably from 15 to 150 parts by mass. By using the water-soluble organic solvent in such a range, the adsorption rate of the resin having an acid value to the surface of the pigment component is improved, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained). Examples of the water-soluble organic solvent capable of improving the adsorption rate include triethylene glycol, glycerin, 2-pyrrolidone, 1-(2-hydroxyethyl)-2-pyrrolidone, dipropylene glycol, propylene glycol, and 1,5-pentanediol.
When the inkjet printing ink obtained using the pigment composition is applied to a thermal type inkjet printing method described later, a high-boiling-point solvent having a boiling point of 100°C or more is preferably used as the organic solvent. In addition, the used of a high-boiling-point solvent having a boiling point of 100°C or more as the organic solvent is preferable in that wetting of the pigment is promoted, and as a result, the resin is easily adsorbed to the pigment to improve storage stability and the like.
As the high-boiling-point solvent, for example, glycerin, 2-pyrrolidone, 1-(2-hydroxyethyl)-2-pyrrolidone, dipropylene glycol, propylene glycol, 1,5-pentanediol, or the like can be used.

As the aqueous medium, it is preferable to use an aqueous medium having a dispersion term (δD1), a polarity term (δP1), and a hydrogen bond term (δH1) within the following ranges to obtain an ink that has further excellent storage stability and is easily suppressed from causing clogging of ink ejection nozzles at the initial stage of ink ejection and a pigment composition to be used for the production thereof.
The dispersion term (δD1) of the aqueous medium (a) is preferably in the range of 12 to 24, more preferably 14 to 21, and particularly preferably 16 to 19.
The polarity term (δP1) of the aqueous medium (a) is preferably in the range of 4 to 17, more preferably 6 to 15, and particularly preferably 8 to 13.
The hydrogen bond term (δH1) of the aqueous medium (a) is preferably in the range of 6 to 43, more preferably 9 to 35, and particularly preferably 9 to 30.
As the aqueous medium having the dispersion term (δD1), the polarity term (δP1), and the hydrogen bond term (δH1) within the above-described ranges, for example, triethylene glycol, glycerin, 2-pyrrolidone, 1-(2-hydroxyethyl)-2-pyrrolidone, dipropylene glycol, propylene glycol, 1,5-pentanediol, or the like can be used.
The values of the dispersion term (δD1), the polarity term (δP1), and the hydrogen bond term (δH1) of the aqueous medium are values recorded in Hansen Solubility Parameters in Practice 4th Edition 4.1.07 (HSPiP) which is computer software.
The aqueous medium having the dispersion term (δD1), the polarity term (δP1), and the hydrogen bond term (δH1) in the above ranges is used in the range from, relative to the total mass of the aqueous medium contained in the pigment composition, preferably 10 to 95 mass%, more preferably 50 to 80 mass%.

The aqueous medium contained in the pigment composition is preferably used in the range from, relative to the total mass of the pigment composition of the present invention, 30 to 98 mass% and is preferably used in the range from 60 to 95 mass%, for producing an aqueous ink.
As the aqueous medium used in the pigment composition of the present invention, it is preferable to use the above-described water in combination with the high-boiling-point solvent, the aqueous medium having the dispersion term (δD1), the polarity term (δP1), and the hydrogen bond term (δH1), and the like, because a resin having an acid value such as the pigment dispersion resin is likely to adsorb to the surface of the pigment component. In particular, when a wet type dispersion apparatus is used in the production of the pigment composition of the present invention, or when an inkjet printing ink obtained using the pigment composition is applied to a thermal type inkjet printing method to be described later, it is preferable to use, as the aqueous medium, the above-described water in combination with the high-boiling-point solvent, the aqueous medium having the dispersion term (δD1), the polarity term (δP1), and the hydrogen bond term (δH1), and the like, because as a result of promoting wetting of the pigment, a resin is likely to adsorb to the pigment, and storage stability and the like are improved.

The aqueous medium preferably satisfies at least one of the following points from the viewpoint of efficiently reducing the number of coarse particles and the viewpoint of easily shortening the time for obtaining a pigment composition having desired physical properties (the number of coarse particles, particle size, or the like) of a solids content in the second treatment step.
· The aqueous medium preferably contains at least one selected from the group consisting of glycols, lactams, and glycerin.
· The aqueous medium preferably contains at least one selected from the group consisting of triethylene glycol, triethylene glycol, and dipropylene glycol.
· The aqueous medium preferably contains at least one selected from the group consisting of N-(2-hydroxyethyl)pyrrolidone and 2-pyrrolidone.
· When the pigment component contains carbon black, the aqueous medium preferably contains at least one selected from the group consisting of N-(2-hydroxyethyl)pyrrolidone, 2-pyrrolidone, triethylene glycol, and glycerin.

The aqueous medium is, relative to the total mass of the pigment composition of the present invention, preferably used in the range from 40 to 90 mass% and the aqueous medium is preferably used in the range from 60 to 85 mass% for producing an aqueous ink.

The pigment composition contains a resin having an acid value. Examples of the resin having an acid value include a pigment dispersion resin and a binder resin. As the resin having an acid value, a known resin can be used. For example, a radical polymer can be used, and it is preferable to use a radical polymer having an aromatic cyclic structure or a heterocyclic structure. In such a case, the resin having an acid value is likely to adsorb to the pigment component through the π-π interaction between the resin having an acid value and carbon black, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

When a radical polymer having an anionic group is used as the resin having an acid value (for example, pigment dispersion resin), it is preferable to use a radical polymer (neutralized product) in which a part or all of the anionic group is neutralized with a basic compound. The resin having an acid value is easily dissolved in an aqueous medium containing water through neutralization, adsorption of the pigment component to the surface is promoted, and a good dispersion state is easily maintained. As a result, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

Examples of the aromatic cyclic structure or heterocyclic structure include a cyclic structure introduced into a radical polymer by using a monomer having an aromatic cyclic structure or a heterocyclic structure. The aromatic cyclic structure is preferably a benzene ring structure, and more preferably a structure derived from styrene. By using the resin having an acid value, which is a radical polymer having an aromatic cyclic structure or a heterocyclic structure, the adsorption properties of the resin having an acid value to the pigment component can be enhanced, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

As the radical polymer that can be used as the resin having an acid value, for example, a polymer obtained by radically polymerizing various monomers can be used.

As the monomer, a monomer having an aromatic cyclic structure can be used when an aromatic cyclic structure is introduced into the resin having an acid value, and a monomer having a heterocyclic structure can be used when a heterocyclic structure is introduced.

Examples of the monomer having an aromatic cyclic structure include styrene, p-tert-butyldimethylsiloxystyrene, o-methylstyrene, p-methylstyrene, p-tert-butylstyrene, p-tert-butoxystyrene, m-tert-butoxystyrene, p-tert-(1-ethoxymethyl)styrene, m-chlorostyrene, p-chlorostyrene, p-fluorostyrene, α-methylstyrene, p-methyl-α-methylstyrene, vinyl naphthalene, and vinylanthracene.

Examples of the monomer having a heterocyclic structure include vinylpyridine-based monomers such as 2-vinylpyridine and 4-vinylpyridine.

When a polymer having both an aromatic cyclic structure and a heterocyclic structure is used as the radical polymer, a monomer having an aromatic cyclic structure and a monomer having a heterocyclic structure can be used in combination as the monomer.

As the resin having an acid value, a radical polymer having an aromatic cyclic structure is preferable. Thus, as the monomer, a monomer having an aromatic cyclic structure is preferable, and at least one selected from the group consisting of styrene, α-methylstyrene, and tert-butylstyrene is more preferable.

The content of the monomer having an aromatic cyclic structure or a heterocyclic structure is, relative to the total mass of monomers, preferably 20 mass% or more, more preferably 40 mass% or more, and still more preferably from 50 to 95 mass%, from the viewpoint of further enhancing the adsorption properties of the resin having an acid value to the pigment component.

As the resin having an acid value, a monomer having an anionic group can be used as the monomer from the viewpoint of producing a radical polymer having an acid value in the range described later.

Examples of the monomer having an anionic group include monomers having an anionic group such as a carboxy group, a sulfonic acid group, or a phosphate group. As the monomer having an anion group, a monomer having a carboxy group is preferable, and at least one selected from the group consisting of acrylic acid and methacrylic acid is more preferable. In such a case, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

The content of the monomer having an anionic group is, from the viewpoint of easily obtaining a radical polymer having an acid value in the range described later, relative to the total mass of monomers that can be used for producing the resin having an acid value, preferably from 5 to 80 mass%, more preferably from 5 to 60 mass%, and still more preferably from 5 to 50 mass%.

As the monomer that can be used for the production of the resin having an acid value, other monomers can be used as necessary in addition to the above-described monomers. Examples of other monomers include methyl (meth)acrylate, n-propyl (meth)acrylate, isopropyl (meth)acrylate, n-butyl (meth)acrylate, sec-butyl (meth)acrylate, tert-butyl (meth)acrylate, 2-ethylbutyl (meth)acrylate, 1,3-dimethylbutyl (meth)acrylate, hexyl (meth)acrylate, 2-ethylhexyl (meth)acrylate, octyl (meth)acrylate, ethyl (meth)acrylate, n-butyl (meth)acrylate, 2-methylbutyl (meth)acrylate, pentyl (meth)acrylate, heptyl (meth)acrylate, nonyl (meth)acrylate, 3-ethoxypropyl (meth)acrylate, 3-ethoxybutyl (meth)acrylate, dimethylaminoethyl (meth)acrylate, 2-hydroxyethyl (meth)acrylate, 2-hydroxybutyl (meth)acrylate, ethyl-α-(hydroxymethyl) (meth)acrylate, dimethylaminoethyl (meth)acrylate, hydroxyethyl (meth)acrylate, hydroxypropyl (meth)acrylate, phenyl (meth)acrylate, benzyl (meth)acrylate, phenylethyl (meth)acrylate, diethylene glycol (meth)acrylate, triethylene glycol (meth)acrylate, polyethylene glycol (meth)acrylate, glycerin (meth)acrylate, bisphenol A (meth)acrylate, dimethyl maleate, diethyl maleate, and vinyl acetate. These monomers can be used singly or in combination of two or more thereof. As other monomers, such an acrylate or methacrylate may be used singly, or an acrylate and a methacrylate may be used in combination.

As the resin having an acid value, a polymer in which a structure formed through radical polymerization of a monomer is linear (linear), a polymer having a branched (grafted) structure, a polymer having a crosslinked structure, or the like can be used. In each polymer, the monomer sequence is not particularly limited, and a polymer having a random sequence or a block sequence can be used.

The polymer having a crosslinked structure can be produced by using a monomer having a crosslinkable functional group as the monomer. Examples of the monomer having a crosslinkable functional group include poly(meth)acrylates of polyhydric alcohols such as ethylene glycol di(meth)acrylate, propylene glycol di(meth)acrylate, polyethylene glycol di(meth)acrylate, poly(oxyethylene oxypropylene glycol di(meth)acrylate, and tri(meth)acrylate of an alkylene oxide adduct of glycerin; glycidyl (meth)acrylate; and divinylbenzene.

As the resin having an acid value, a polymer having a structural unit derived from the above-described monomer can be used, but a polymer obtained by polymerizing only a monomer having an anionic group and a monomer having an aromatic cyclic structure or a heterocyclic structure is preferable.

As the resin having an acid value, a polymer having a structural unit derived from styrene and a structural unit derived from (meth)acrylic acid is preferable, and at least one selected from the group consisting of a styrene-(meth)acrylic acid copolymer and a styrene-(meth)acrylic acid-based ester-(meth)acrylic acid copolymer is more preferable. The polymer having a styrene-derived structural unit and a (meth)acrylic acid-derived structural unit preferably has an acid value in the range described later. The aromatic ring site in the styrene-derived structural unit is firmly adsorbed to the surface of the pigment component, and the carboxy group in the (meth)acrylic acid-derived structural unit has good affinity with water, and thus, good dispersion stabilization is easily obtained. With this configuration, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

As the styrene-(meth)acrylic acid copolymer, any of a styrene-acrylic acid copolymer, a styrene-methacrylic acid copolymer, and a styrene-acrylic acid-methacrylic acid copolymer can be used, and at least one selected from the group consisting of a styrene-acrylic acid copolymer and a styrene-acrylic acid-methacrylic acid copolymer is preferable. In such a case, it is easy to adjust the adsorption force with the pigment component and the dispersion force in water, and as a result, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

In the styrene-(meth)acrylic acid copolymer, the total amount of the styrene-derived structural unit, the acrylic acid-derived structural unit, and the methacrylic acid-derived structural unit is, relative to the total mass of the structural units of the styrene-(meth)acrylic acid copolymer, preferably from 80 to 100 mass%, and more preferably from 90 to 100 mass%.

The radical polymerization rate (reaction rate) of each monomer in radical polymerization is substantially the same, and the use proportion (charging proportion) of each monomer is considered to be the same as the proportion of the structural unit derived from each monomer constituting the radical polymer.

The radical polymer can be produced, for example, by radically polymerizing the above-described monomer by a method such as a bulk polymerization method, a solution polymerization method, a suspension polymerization method, or an emulsion polymerization method.

When the radical polymer is produced, a known and common polymerization initiator, a chain transfer agent (polymerization degree adjusting agent), a surfactant, an anti-foaming agent, and the like can be used, as necessary.

Examples of the polymerization initiator include 2,2'-azobis(2,4-dimethylvaleronitrile), 2,2'-azobisisobutyronitrile, 1,1'-azobis(cyclohexane-1-carbonitrile), benzoyl peroxide, dibutyl peroxide, and butyl peroxybenzoate. The content of the polymerization initiator is, relative to the total mass of monomers used for producing the radical polymer, preferably from 0.1 to 10 mass%.

When a radical polymer obtained by a solution polymerization method is used, as the resin having an acid value, a radical polymer obtained by removing the solvent contained in a radical polymer solution obtained by a solution polymerization method, and then drying and pulverizing to form fine particles can be used. When the resin having an acid value, which is a radical polymer formed into fine particles, is used in combination with a water-soluble organic solvent and a basic compound, the resin is neutralized with the basic compound in the first step, is dissolved in an aqueous medium containing the water-soluble organic solvent, and adsorption of the pigment component wetted with the aqueous medium proceeds. As a result, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

As the resin having an acid value, a resin having an acid value classified by a mesh sieve having a mesh size (diameter) of 1 mm or less is preferable.

The acid value of the resin having an acid value (for example, pigment dispersion resin) is preferably 60 to 300 mgKOH/g, more preferably 80 to 250 mgKOH/g, still more preferably 100 to 200 mgKOH/g, and it is particularly preferable to use a resin having an acid value of 120 to 180 mgKOH/g. In these cases, the adsorption properties of the resin having an acid value to the pigment component can be enhanced, and an appropriate affinity for an aqueous medium (for example, an aqueous medium containing water and a water-soluble organic solvent) is easily obtained, and thus a good dispersion state is easily maintained. Thus, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained).

The acid value is preferably an acid value derived from an anionic group such as a carboxy group, a sulfonic acid group, or a phosphate group. The acid value is a numerical value measured in accordance with Japanese Industrial Standards "K0070:1992. Method for Testing Acid Value, Saponification Value, Ester Value, Iodine Value, Hydroxyl Value, and Unsaponified Product of Chemical Product" except that tetrahydrofuran is used instead of diethyl ether as a solvent, and the acid value refers to the amount (mg) of potassium hydroxide necessary for completely neutralizing 1 g of the resin having an acid value.

The weight average molecular weight of the resin having an acid value (for example, pigment dispersion resin) is preferably from 2000 to 40000, more preferably from 5000 to 30000, still more preferably from 5000 to 25000, preferably in the range from 6000 to 20000, and particularly preferably in the range from 8000 to 12000. In these cases, aggregation with adjacent pigment components is suppressed, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained). The "weight average molecular weight" is a value measured by a GPC (gel permeation chromatography) method, and is a value converted into a molecular weight of polystyrene used as a standard substance.

The content of the resin having an acid value (for example, the pigment dispersion resin) is, relative to 100 parts by mass of the pigment component, preferably 5 to 200 parts by mass, and more preferably 10 to 100 parts by mass. As a result, a good dispersion state is easily maintained with sufficient affinity to an aqueous medium (for example, water), and the resin having an acid value is easily adsorbed to the pigment component. Thus, excellent storage stability that suppresses occurrence of sedimentation of the solids content in the pigment composition over time is easily obtained, occurrence of sedimentation of the solids content in the ink over time is easily suppressed, occurrence of clogging and the like of ink ejection nozzles at the initial stage of ink ejection is easily suppressed (excellent initial ejection stability is easily obtained), and occurrence of clogging and the like of ink ejection nozzles over time is easily suppressed (excellent temporal ejection stability is easily obtained). In addition, the amount of the resin having a free acid value that is not adsorbed to the pigment component is reduced, and the ejection property of the ink is easily improved. Further, aggregation of the pigment component due to the free resin is easily suppressed, and the ink is easily stabilized.

The pigment composition may contain a basic compound. When the resin having an acid value has an anion group, the basic compound neutralizes the anion group. By neutralizing the resin having an acid value with the basic compound, the affinity of the pigment component to which the resin having an acid value is adsorbed to the aqueous medium is enhanced. As a result, coarse particles are easily reduced, the dispersion state of the solids content in the pigment composition is easily stabilized, the generation of coarse particles over time is easily and effectively suppressed, and the generation of sedimentation of the solids content over time is easily suppressed.

As the basic compound, an inorganic basic compound, an organic basic compound, or the like can be used. Examples of the inorganic basic compound include hydroxides of alkali metals such as potassium and sodium; carbonates of alkali metals such as potassium and sodium; hydroxides of alkaline earth metals such as calcium and barium; and carbonates of calcium, barium, and the like. Examples of the organic basic compound include amino alcohols such as triethanolamine, N,N-dimethanolamine, N-ethylethanolamine, dimethylethanolamine, and N-butyldiethanolamine; morpholines such as morpholine, N-methylmorpholine, and N-ethylmorpholine; piperazines such as N-(2-hydroxyethyl)piperazine and piperazine hexahydrate; and ammonium hydroxide. Since the basic compound is excellent in neutralization efficiency of the resin having an acid value, an alkali metal hydroxide (potassium hydroxide, sodium hydroxide, lithium hydroxide, or the like) is preferable, and potassium hydroxide is more preferable from the viewpoint of easily improving the dispersion stability of the pigment component to which the resin having an acid value is adsorbed in an aqueous medium.

When a resin having an anion group and having an acid value is used, it is preferable to use a basic compound within a range in which the rate of neutralization of the resin having an acid value is 80 to 120%. In such a case, the affinity of the neutralized resin having an acid value for the aqueous medium is increased, and as a result, the dispersion stability of the pigment component to which the resin having an acid value is adsorbed in the aqueous medium is easily improved. The rate of neutralization can be calculated, for example, from the following formula. Rate of neutralization [%] = ((Mass [g] of basic compound × 56 × 1000)/(Acid value of resin having acid value × Equivalent of basic compound × Mass [g] of resin having acid value)) × 100

The pigment composition according to the present embodiment can be used as an ink by being diluted to a desired concentration with the above-described aqueous medium and/or by adding additives such as a resin having an acid value (binder of acrylic resin, polyurethane resin, or the like described above), a drying inhibitor, a penetrant, a surfactant, an antiseptic, a viscosity modifier, a pH adjuster, a chelating agent, a plasticizer, an antioxidant, and an ultraviolet absorber. After the ink is obtained, centrifugation treatment or filtration treatment may be conducted.

Examples of the ink include paint for automobiles or building materials; and printing ink such as inkjet printing ink, offset ink, gravure ink, flexo ink, and silk screen ink. When the ink is used as an ink for inkjet printing, the content of the pigment component in the ink is, relative to the total mass of the ink, preferably from 1 to 10 mass%.

As the aqueous medium, a water-soluble organic solvent can be used from the viewpoint of suppressing drying of the ink and adjusting the viscosity or concentration of the ink to a suitable range. As the water-soluble organic solvent, the water-soluble organic solvent described above as a constituent component of the pigment composition can be used. Examples of the water-soluble organic solvent include lower alcohols such as ethanol and isopropyl alcohol; ethylene oxide adducts of alkyl alcohols such as ethylene glycol hexyl ether and diethylene glycol butyl ether; and propylene oxide adducts of alkyl alcohols such as propylene glycol propyl ether, from the viewpoint of enhancing the ink permeability to a recording medium.

Examples of the drying inhibitor include glycerin, ethylene glycol, diethylene glycol, triethylene glycol, triethylene glycol mono-n-butyl ether, polyethylene glycol having a molecular weight of 2000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, mesoerythritol, and pentaerythritol. As the drying inhibitor, the same compound as the above-described water-soluble organic solvent used in the pigment composition can be used. Thus, when a water-soluble organic solvent is already used in the pigment composition, the water-soluble organic solvent can also serve as a drying inhibitor.

The penetrant can be used for the purpose of improving the permeability to the recording medium or adjusting the dot size on the recording medium. Examples of the penetrant include lower alcohols such as ethanol and isopropyl alcohol; and glycol monoethers of alkyl alcohols such as ethylene glycol hexyl ether, diethylene glycol butyl ether, and propylene glycol propyl ether.

Surfactants can be used to adjust ink properties such as surface tension. The surfactant is not particularly limited, and examples thereof include various anionic surfactants, nonionic surfactants, cationic surfactants, and ampholytic surfactants. At least one selected from the group consisting of anionic surfactants and nonionic surfactants is preferable. The surfactant may be used singly or in combination of two or more thereof.

Examples of the anionic surfactant include alkylbenzene sulfonates, alkylphenyl sulfonates, alkylnaphthalene sulfonates, higher fatty acid salts, sulfate salts of higher fatty acid esters, sulfonates of higher fatty acid esters, sulfate salts and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples thereof include dodecylbenzenesulfonate, isopropylnaphthalenesulfonate, monobutylphenylphenol monosulfonate, monobutylbiphenylsulfonate, and dibutylphenylphenol disulfonate.

Examples of the nonionic surfactant include polyoxyethylene alkyl ether, polyoxyethylene alkylphenyl ether, polyoxyethylene fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerol fatty acid ester, sucrose fatty acid ester, polyoxyethylene alkylamine, polyoxyethylene fatty acid amide, fatty acid alkylolamide, alkylalkanolamide, acetylene glycol, oxyethylene adducts of acetylene glycol, and polyethylene glycol polypropylene glycol block copolymer. Among these, at least one selected from the group consisting of polyoxyethylene nonylphenyl ether, polyoxyethylene octylphenyl ether, polyoxyethylene dodecylphenyl ether, polyoxyethylene alkyl ether, polyoxyethylene fatty acid ester, sorbitan fatty acid ester, polyoxyethylene sorbitan fatty acid ester, fatty acid alkylolamide, acetylene glycol, oxyethylene adducts of acetylene glycol, and polyethylene glycol polypropylene glycol block copolymer is preferable.

As other surfactants, silicone-based surfactants such as polysiloxane oxyethylene adducts; fluorine-based surfactants such as perfluoroalkyl carboxylate, perfluoroalkyl sulfonate, and oxyethylene perfluoroalkyl ether; biosurfactants such as spiculisporic acid, rhamnolipid, and lysolecithin, and the like, can also be used.

### Anti-foaming Agent

In the production method of the present invention, it is preferable to add an anti-foaming agent to the pigment composition and the raw material composition. The pigment composition and the raw material composition containing an anti-foaming agent are difficult to foam in the dispersion step, and stable operation of the dispersing machine can be achieved. As the anti-foaming agent, a surfactant having a low hydrophilic/hydrophobic balance (HLB), in particular, a surfactant having an HLB of 9 or less, a metal soap-based anti-foaming agent, a polyether-based anti-foaming agent, a mineral oil-based anti-foaming agent, a silicone-based anti-foaming agent, or the like can be used. Among these, it is preferable to use an acetylene glycol-based surfactant. Specifically, it is preferable to use SURFYNOL 104 series, SURFYNOL 420, SURFYNOL 440, SURFYNOL 465, SURFYNOL 485, SURFYNOL 2502, SURFYNOL CT211, SURFYNOL PSA-336, and SURFYNOL SE-F (all available from Nissin Chemical Industry Co., Ltd.), and it is more preferable to use SURFYNOL SE-F and SURFYNOL 440.

In the pigment composition obtained by the method, when the total mass of the resin having an acid value is 100 mass%, 20 to 60 mass% of the resin having an acid value is preferably adsorbed to the pigment component. This makes it possible to obtain a pigment composition that hardly causes a significant increase in viscosity over time and has very excellent storage stability. Here, the mass ratio of the resin having an acid value adsorbed to the pigment component to the total mass of the resin having an acid value [the mass of the resin having an acid value adsorbed to the pigment component/the mass of the total amount of the resin having an acid value] (hereinafter, abbreviated as "resin adsorption rate") refers to a value calculated by the following method.
The flow potential in the range of ±2500 mV was measured with a platinum electrode of a sample cell using a particle charge meter (trade name: PCD-04 available from Spectris). The pigment composition was placed in the sample cell and titrated with a titrant (0.01 N, Poly-DADMAC). The titration of the charge amount was conducted based on a potential difference (that is, the flow potential of the liquid) caused by the movement of the sample cell and the moving piston. Titration was terminated when the flow potential exceeded zero (potential became positive). The value obtained by multiplying the value obtained by dividing the amount of dropwise addition from the inflection point by the amount of dropwise addition when the flow potential reached zero by 100 was obtained as the resin adsorption rate.
The resin adsorption rate is more preferably in the range from 20 to 50 mass%, and particularly preferably in the range from 25 to 40 mass%, to produce an inkjet printing ink that has very excellent storage stability because it hardly causes a significant increase in viscosity over time, can reduce the number of coarse particles having a particle size of 1.0 µm or more that can be contained in the pigment composition, and can produce a printed material having high color developability.

Since the number of coarse particles is small, the pigment composition obtained by the production method of the present invention can be suitably used particularly as an ink for inkjet printing. The number of coarse particles of the pigment composition produced by the production method of the present invention refers to the number of particles having a diameter of 1.0 µm or more and the number of particles having a diameter of 0.5 µm or more, and can be measured using a particle size distribution meter (Accusizer 780 APS available from Particle Sizing Systems, number counting system). As a specific measurement method, the pigment composition is diluted with pure water so that the sensitivity falls in the range from 1000 to 4000 particles/mL, the number of particles having a diameter of 1.0 µm or more and the number of particles having a diameter of 0.5 µm or more contained in the diluted pigment composition are measured 3 times using the particle size distribution meter, and an average value of values obtained by multiplying each measured value of the number of particles by a dilution concentration can be calculated as the number of coarse particles.
As the number of coarse particles of the pigment composition produced by the production method of the present invention, in 1.0 mL of the pigment composition with a pigment concentration of 13%, it is preferable that the number of particles having a diameter of 1.0 µm or more is 2600 × 10⁶ or less, and the number of particles having a diameter of 0.5 µm or more is 14400 × 10⁶ or less, and it is more preferable that the number of particles having a diameter of 1.0 µm or more is 300 × 10⁶ or less, and the number of particles having a diameter of 0.5 µm or more is 2000 × 10⁶ or less. When the number of coarse particles is within such a range, steps such as centrifugation can be reduced, and nozzle clogging of the inkjet printing ink can be suppressed.

Since the pigment composition produced by the production method of the present invention has a suitable particle size, the optical density (OD) at the time of printing is increased, and an excellent printed material can be obtained. The volume average particle size (Mv), the number average particle size (Mn), D50, D90, and D95 can be measured as the particle size by detecting scattered light of laser light in an environment of 25°C using a Nanotrac particle size distribution meter "UPA 150" available from MicrotracBEL Corporation. The volume average particle size (Mv) is preferably from 50 nm to 170 nm, and more preferably from 80 nm to 150 nm. The number average particle size (Mn) is preferably from 30 nm to 120 nm, and more preferably from 50 nm to 100 nm. The median size D50 is preferably from 70 nm to 140 nm, the median size D90 is preferably from 120 nm to 230 nm, and the median size D95 is preferably from 150 nm to 270 nm.

### Ink

The pigment composition obtained by the production method of the present invention can be suitably utilized as an ink, and in particular, can be suitably utilized as an ink for inkjet printing. In addition to the pigment composition obtained by the production method of the present invention, an additional aqueous medium and surfactant, a resin, a wax, an additive, and the like may be added to the ink.
As the additional aqueous medium and surfactant, those similar to the aqueous medium and surfactant described above can be used.

Examples of the resin include polyurethane resin, acrylic resin, epoxy resin, polyester resin, and shellac. Note that, relative to the total amount of the ink, the content is preferably in a range of 5.5 mass% or less, and is more preferably 3.5 mass% or less to obtain an ink that has excellent scratch resistance and can produce a printed material having high color developability when printed on plain paper with a very short drying time after printing.
Examples of the wax include polyolefin wax, and specifically, as the polyolefin wax, polyethylene, polypropylene, polybutylene, polytetrafluoroethylene, or a polymer of ethylene and propylene or butylene is preferably used, polyethylene, polypropylene, and polybutylene are more preferably used, and the use of polyethylene is particularly preferable for obtaining an ink that can be printed by an inkjet printing method and can obtain a printed material excellent in color developability and abrasion resistance.

As the additive, for example, an alkaline agent, a pH adjusting agent, a surfactant, a preservative, a chelating agent, a plasticizer, an antioxidant, an ultraviolet absorber, and the like may be blended according to the required properties.

The ink can be produced, for example, by mixing an aqueous medium, a wetting agent, a binder resin, wax, an additive, and the like as necessary with the pigment dispersion obtained by the production method of the present invention. Specifically, the ink can be produced, for example, by supplying an aqueous medium such as pure water to the pigment dispersion, then supplying a lubricant as necessary, stirring the mixture at room temperature for 30 to 90 minutes, then supplying a resin dispersion or the like to the aqueous medium in advance, further stirring the mixture at room temperature for 30 to 90 minutes, then supplying a potassium hydroxide aqueous solution having a potassium hydroxide concentration of 5 mass% to adjust the pH of the ink to 8.5 to 9.8, and stirring the mixture at room temperature for 30 to 90 minutes, but the production method is not limited to this method.

As the ink, for example, an ink having a viscosity in the range from 1 to 10 mPa·sec is preferably used. In particular, when the ink is discharged by an inkjet printing method, it is more preferable to use an ink having a viscosity of from 1 to 6 mPa·sec.

### Printed Material

The ink containing the pigment composition obtained by the production method of the present invention can be used for printing on a recording medium.

Examples of the recording medium include fine coated paper having a surface coated with a chemical agent that promotes drying of ink in a thin layer, and plain paper, with which a high-quality printed material can be obtained.

Typical examples of the plain paper include PPC paper used in an electrophotographic copying machine or the like. The plain paper can be suitably used with a variety of the ratio of used wastepaper pulp, the degree of bleaching, and the like depending on the brand, and also with a variety of the paper thickness.

The ink can be applied to various printing methods, but can be suitably used exclusively in a printing scene by an inkjet printing method. Examples of the inkjet printing method include a continuous injection type (charge control type, spray type, or the like) and an on-demand type (piezo type, thermal type, electrostatic suction type, or the like), and the inkjet printing method is particularly suitable for printing by a thermal type inkjet printing method. When this aqueous ink for ink jet recording is basically applied to these various ink jet systems, extremely stable ink ejection becomes possible.

### Examples

Hereinafter, the present invention will be specifically described with reference to Examples, but the present invention is not limited to these Examples.

### Production of Styrene-acrylic Acid-based Copolymer

### Styrene-acrylic Acid Copolymer A

Into a reaction vessel equipped with a stirring apparatus, a dropping apparatus, and a reflux apparatus, 100 parts by mass of methyl ethyl ketone was charged, and then the inside of the reaction vessel was purged with nitrogen while the content was being stirred. Next, the reaction vessel was heated, and in a state where methyl ethyl ketone was refluxed, a mixed liquid of 77 parts by mass of styrene, 10 parts by mass of acrylic acid, 13 parts by mass of methacrylic acid, and 8 parts by mass of a polymerization catalyst (available from Wako Pure Chemical Industries, Ltd., trade name: V-59) was added dropwise from the dropping apparatus over 2 hours. From the middle of the dropwise addition, the temperature of the reaction vessel was maintained at 80°C. After completion of the dropwise addition, the reaction was further continued at the same temperature for 25 hours. After completion of the reaction, the inside of the reaction vessel was allowed to cool, and methyl ethyl ketone was then added, whereby a solution having a solids content concentration of 50 mass% was obtained. Further, this solution was dried and then crushed into a powder form of 1 mm or less, whereby a styrene-acrylic acid copolymer A was obtained. The styrene-acrylic acid copolymer A had an acid value of 150 mgKOH/g and a weight average molecular weight of 8800.

The weight average molecular weight is a value measured by a GPC (gel permeation chromatography) method, and is a value converted into a molecular weight of polystyrene used as a standard substance. The measurement was conducted with the following apparatuses under the following conditions.
Liquid feeding pump: LC-9A (available from Shimadzu Corporation)
System controller: SLC-6B (available from Shimadzu Corporation)
Auto injector: S1L-6B (available from Shimadzu Corporation)
Detector: RID-6A (available from Shimadzu Corporation)
Data processing software: Sic480II data station (available from System Instruments)
Column: GL-R400 (guard column) + GL-R440 + GL-R450 + GL-R400M (available from Hitachi Chemical Co., Ltd.)
Elution solvent: THF (tetrahydrofuran)
Elution flow rate: 2 mL/min
Column temperature: 35°C
Production of Pigment Composition
Black Pigment Composition

### Example 1

A raw material composition (pigment concentration: 25 mass%, solids content concentration: 35 mass%) in an amount of 20000 g was produced by mixing 5000 g of a black pigment (carbon black, #960, dry pigment available from Mitsubishi Chemical Corporation), 2000 g of the styrene-acrylic acid-based copolymer A, 5500 g of triethylene glycol, 250 g of SURFYNOL SEF, 6616 g of pure water, and 634 g of a 48 mass% aqueous potassium hydroxide solution.

A rotor-stator-type treatment machine (available from IKA, equipment name: MK2000/05, pilot-scale equipment, in-line type, cap adjustment: 0.1 mm) was charged with 20000 g of the raw material composition. Subsequently, as the first dispersion treatment step (crushing treatment or cracking treatment), a circulation treatment was conducted at a liquid feeding flow rate of 40 kg/min, a peripheral speed of 32 m/s (shear rate: 320000 s⁻¹), and a rotation speed of 8200 rpm for 30 minutes while raising the temperature to 60°C, whereby a first pigment composition (slurry) was produced. The first treatment step for this raw material composition was conducted multiple times, whereby the first pigment composition (slurry) in an amount required for the next step was produced. Next, pure water was added to the obtained first pigment composition so that the first pigment composition had a pigment concentration of 20 mass% and a solids content concentration of 28 mass%. As the second dispersion treatment step (crushing treatment or cracking treatment), 35000 g of the first pigment composition having a pigment concentration of 20 mass% was subjected to a circulation treatment at a peripheral speed of 14 m/s and a liquid feeding flow rate of 23 kg/min for 150 minutes, with a bead size of 0.2 mm and a bead filling rate of 90%, while raising the temperature to 30°C or more, using a media-type dispersing machine (available from Ashizawa Finetech Ltd., equipment name: wet bead mill "Mugen Flow (trade name)" MGF2), whereby a second pigment composition was obtained. Further, as the third dispersion treatment step (crushing treatment or cracking treatment), 12850 g of the second pigment composition was subjected to a circulation treatment at a peripheral speed of 14 m/s and a liquid feeding flow rate of 10 kg/min for 75 minutes, with a bead size of 0.1 mm and a bead filling rate of 90%, while raising the temperature to 30°C or more, using a media-type dispersing machine (available from Ashizawa Finetech Ltd., equipment name: wet bead mill "Mugen Flow (trade name)" MGF2), whereby a third pigment composition was obtained.

### Example 2

Pure water was added to the second pigment composition obtained in Example 1 so that the second pigment composition had a pigment concentration of 17 mass% and a solids content concentration of 24 mass%. The third pigment composition was obtained by conducting the third dispersion treatment step (crushing treatment or cracking treatment) on 14300 g of the second pigment composition having a pigment concentration of 17 mass% in the same manner as in Example 1 except that the bead size and the liquid feeding flow rate were changed to the values presented in Table 1 in the third dispersion treatment step.

### Example 3

A raw material composition was obtained in the same manner as in Example 1. As the first dispersion treatment step, 20000 g of the raw material composition was subjected to a circulation treatment at a liquid feeding flow rate of 10 kg/min and a peripheral speed of 32 m/s (shear rate: 64000 s⁻¹) at a rotation speed of 8200 rpm for 30 minutes while raising the temperature to 60°C using a rotor-stator-type treatment machine (available from IKA, equipment name: DR2000/05, pilot-scale equipment, in-line type, three-stage type, treatment units (rotor and stator) of 2G/4M/6F in order from vertical direction information), whereby a first pigment composition (slurry) was produced. Next, pure water was added to the obtained first pigment composition so that the first pigment composition had a pigment concentration of 22 mass% and a solids content concentration of 31 mass%. As the second dispersion treatment step, 3000 g of the first pigment composition having a pigment concentration of 22 mass% was subjected to a circulation treatment at a peripheral speed of 12.5 m/s and a liquid feeding flow rate of 0.6 kg/min for 60 minutes, with a bead size of 0.3 mm and a bead filling rate of 80%, while raising the temperature to 30°C or more, using a media-type dispersing machine (available from ASADA IRON WORKS CO., LTD., equipment name: Nanomoll (NM-L), laboratory-scale equipment), whereby a second pigment composition was obtained.

### Example 4

Pure water was added to the raw material composition obtained in the same manner as in Example 1 so that the raw material composition had a pigment concentration of 20 mass% and a solids content concentration of 28 mass%. As the first dispersion treatment step, 1700 g of the raw material composition having a pigment concentration of 20 mass% was subjected to a 7-pass treatment at a liquid feeding flow rate of 0.17 kg/min and a peripheral speed of 32 m/s (shear rate: 170000 s⁻¹) at a rotation speed of 20000 rpm while raising the temperature to 60°C using a rotor-stator-type treatment machine (available from IKA, equipment name: magicLAB (DR), laboratory-scale equipment, in-line type, three-stage type, treatment units (rotor and stator) of 2P/4M/6F in order from the upper side in the vertical direction). The first treatment step for this raw material composition was conducted multiple times, whereby the first pigment composition (slurry) in an amount required for the next step was produced.
Next, as the second dispersion treatment step, 20000 g of the obtained first pigment composition was subjected to a circulation treatment at a peripheral speed of 8 m/s and a liquid feeding flow rate of 2.5 kg/min for 120 minutes, with a bead size of 0.1 mm and a bead filling rate of 80%, while raising the temperature to 30°C or more, using a media-type dispersing machine (available from Ashizawa Finetech Ltd, equipment name: wet bead mill "Mugen Flow (trade name)" MGF2), whereby a second pigment composition was obtained.

### Example 5

A second pigment composition was obtained by conducting the second dispersion treatment step in the same manner as in Example 4 except that 20000 g of the first pigment composition obtained in Example 4 was heated to 30°C or more and treated at a peripheral speed of 14 m/s in the second dispersion treatment step.

### Example 6

Pure water was added to the raw material composition obtained in the same manner as in Example 1 so that the raw material composition had a pigment concentration of 20 mass% and a solids content concentration of 28 mass%. In the first dispersion treatment step, 35000 g of the raw material composition was subjected to a circulation treatment for 90 minutes at a peripheral speed of 13.5 m/s, a liquid feeding flow rate of 5 kg/min, with a bead size of 1 mm and a bead filling rate of 85% while raising the temperature to 30°C or more using a media-type dispersing machine (available from Ashizawa Finetech Ltd, equipment name: wet bead mill "Mugen Flow (trade name)" MGF2), whereby a first pigment composition was obtained. The first treatment step for this raw material composition was conducted multiple times, whereby the first pigment composition (slurry) in an amount required for the next step was produced. The second dispersion treatment step (crushing treatment or cracking treatment) was conducted on 32000 g of the obtained first pigment composition under the same conditions as in Example 1, whereby a second pigment composition was obtained. Further, as the third dispersion treatment step (crushing treatment or cracking treatment), 12500 g of the obtained second pigment composition was subjected to a circulation treatment at a peripheral speed of 14 m/s and a liquid feeding flow rate of 10 kg/min for 75 minutes, with a bead size of 0.1 mm and a bead filling rate of 90%, while raising the temperature to 30°C or more, using a media-type dispersing machine (available from Ashizawa Finetech Ltd., equipment name: wet bead mill "Mugen Flow (trade name)" MGF2), whereby a third pigment composition was obtained.

### Example 7

A third pigment composition was obtained by conducting the second dispersion treatment step and the third dispersion treatment step on 35000 g of the first pigment composition obtained in Example 6 in the same manner as in Example 6 except that the bead size was changed to the value presented in Table 1 in the second dispersion treatment step.

### Comparative Example 1

A raw material composition was obtained in the same manner as in Example 1. As the first dispersion treatment step, 1500 g of the raw material composition was subjected to a 5-pass treatment at a peripheral speed of 34 m/s (shear rate: 170000 s⁻¹), a rotation speed of 20000 rpm, and a liquid feeding flow rate of 0.17 kg/min while being heated to 60°C using a rotor-stator-type treatment machine (available from IKA, equipment name: magicLAB (DR), laboratory-scale equipment, in-line type, three-stage type, treatment units (rotor and stator) of 2P/4M/6F in order from the upper side in the vertical direction), whereby a first pigment composition (slurry) was obtained. Next, as the second dispersion treatment step, 1500 g of the first pigment composition was subjected to a 1-pass treatment at 140 MPa using a high-pressure homogenizer (available from Sugino Machine Limited, equipment name: Star Burst 10, oblique-type collision chamber), whereby a second pigment composition was obtained.

### Comparative Example 2

A second pigment composition was obtained by conducting the second dispersion treatment step on 250 g of the first pigment composition obtained in Comparative Example 1 in the same manner as in Comparative Example 1 except that the first pigment composition was subjected to a 1-pass treatment at 140 MPa using a high-pressure homogenizer (available from Sugino Machine Limited, equipment name: Star Burst Mini, ball-type collision chamber) as the second dispersion treatment step.

### Evaluation of Pigment Composition

The number of coarse particles, the particle size, and the viscosity were evaluated through the following procedure using the first pigment composition, the second pigment composition, and the third pigment composition. The results are presented in Tables 1 and 2.

### The Number of Coarse Particles

The number of particles having a diameter of 1.0 µm or more and the number of particles having a diameter of 0.5 µm or more were measured through the following procedure using a particle size distribution meter (Accusizer 780 APS available from Particle Sizing Systems, number counting system). The pigment composition was diluted with pure water so that the sensitivity was in the range of 1000 to 4000 particles/mL. Next, the number of particles having a diameter of 1.0 µm or more and the number of particles having a diameter of 0.5 µm or more contained in the diluted pigment composition were measured 3 times using the particle size distribution meter. Subsequently, the average value of the values obtained by multiplying the measured value of the number of particles by the dilution concentration was calculated as the number of coarse particles.

### Particle Size

The pigment composition was placed in a cell of about 4 mL. The particle size was measured by detecting scattered light of laser light in an environment of 25°C using a Nanotrac particle size distribution meter "UPA 150" available from MicrotracBEL Corporation. As the particle size, a volume average particle size (Mv), a number average particle size (Mn), D50, D90, and D95 were measured.

### Viscosity

After 1.0 mL of the pigment composition was put in a sample cup, the viscosity of the pigment composition was measured under an environment of 25°C using a TV-20 type viscometer available from Toki Sangyo Co., Ltd. For the pigment composition having a pigment concentration of 25 mass% or more, the viscosity was high, and measurement could not be conducted.

**[Table 1]**

| | Dispersion treatment step | | Pigment | Bead size (mm) | Liquid feeding flow rate kg/min | Peripheral speed m/s | Particle size MV (nm) | Particle size Mn (nm) | Particle size D50 (nm) | Particle size D90 (nm) | Particle size D95 (nm) | The number of coarse particles > 0.5 µm (× 10⁶/mL) | The number of coarse particles > 1.0 µm (× 10⁶/ml) | Viscosity (mPa s) | Pigment concentration | Solids content concentration (Pigment resin KOH) | Solids content concentration (Pigment resin) |
|---|---|---|---|---|---|---|---|---|---|---|---|---|---|---|---|---|---|
| Example 1 | First dispersion treatment step | Rotor-stator-type treatment machine (MK2000/05, pilot-scale equipment) | #960 | - | 40 | 32 | 131 | 64 | 115 | 227 | 271 | 8000 | 900 | Unmeasurable | 25% | 37% | 35% |
| | Second dispersion treatment step | Media-type dispersing machine (Mugen Flow, pilot-scale equipment) | | 0.2 | 23 | 14 | 103 | 63 | 95 | 164 | 192 | 1300 | 6 | 38 | 20% | 29% | 28% |
| | Third dispersion treatment step | Media-type dispersing machine (Mugen Flow, pilot-scale equipment) | | 0.1 | 10 | 14 | 97 | 63 | 89 | 151 | 177 | 300 | 1 | 29 | 20% | 29% | 28% |
| Example 2 | First dispersion treatment step | Rotor-stator-type treatment machine (MK2000/05, pilot-scale equipment) | #960 | - | 40 | 32 | 131 | 64 | 115 | 227 | 271 | 8000 | 900 | Unmeasurable | 25% | 37% | 35% |
| | Second dispersion treatment step | Media-type dispersing machine (Mugen Flow, pilot-scale equipment) | | 0.2 | 23 | 14 | 103 | 63 | 95 | 164 | 192 | 1300 | 6 | 38 | 20% | 29% | 28% |
| | Third dispersion treatment step | Media-type dispersing machine (Mugen Flow, pilot-scale equipment) | | 0.05 | 1.5 | 14 | 91 | 58 | 82 | 145 | 171 | 240 | 2 | 12 | 17% | 25% | 24% |
| Example 3 | First dispersion treatment step | Rotor-stator-type treatment machine (DR2000105, pilot-scale equipment) | #960 | - | 10 | 32 | 128 | 65 | 111 | 227 | 271 | 10100 | 1200 | Unmeasurable | 25% | 37% | 35% |
| | Second dispersion treatment step | Media-type dispersing machine (NM-L, laboratory-scale equipment) | | 0.3 | 0.6 | 12.5 | 110 | 68 | 100 | 170 | 202 | 1900 | 0.8 | 86 | 22% | 32% | 31% |
| Example 4 | First dispersion treatment step | Rotor-stator-type treatment machine (magicLAB (DR), laboratory-scale equipment) | #960 | - | 0.17 | 32 | 117 | 62 | 108 | 192 | 224 | 12300 | 1580 | 47 | 20% | 29% | 28% |
| | Second dispersion treatment step | Media-type dispersing machine (Mugen Flow, pilot-scale equipment) | | 0.1 | 25 | 8 | 113 | 71 | 106 | 176 | 201 | 1000 | 18 | 25 | 20% | 29% | 28% |
| Example 5 | First dispersion treatment step | Rotor-stator-type treatment machine (magicLAB (DR), laboratory-scale equipment) | #960 | - | 0.17 | 32 | 117 | 62 | 108 | 192 | 224 | 12300 | 1580 | 47 | 20% | 29% | 28% |
| | Second dispersion treatment step | Media-type dispersing machine (Mugen Flow, pilot-scale equipment) | | 0.1 | 25 | 14 | 98 | 60 | 91 | 156 | 179 | 170 | 0.7 | 33 | 20% | 29% | 28% |

**[Table 2]**

| | Dispersion treatment step | | Pigment | Bead size (mm) | Liquid feeding flow rate kg/min | Peripheral speed m/s | Particle size MV (nm) | Particle size Mn (nm) | Particle size D50 (nm) | Particle size D90 (nm) | Particle size D95 (nm) | The number of coarse particles > 0.5 µm (× 10⁶/mL) | The number of coarse particles > 1.0 µm (x 10⁶/mL) | Viscosity (mPa·s) | Pigment concentration | Solids content concentration (Pigment resin KOH) | Solids content concentration (Pigment resin) |
|---|---|---|---|---|---|---|---|---|---|---|---|---|---|---|---|---|---|
| Example 6 | First dispersion treatment step | Media-type dispersing machine (Mugen Flow, pilot-scale equipment) | #960 | 1 | 5 | 13.5 | 108 | 67 | 100 | 169 | 196 | 11500 | 600 | 49 | 20% | 29% | 28% |
| | Second dispersion treatment step | Media-type dispersing machine (Mugen Flow, pilot-scale equipment) | | 0.2 | 23 | 14 | 103 | 62 | 94 | 165 | 190 | 1550 | 9 | 40 | 20% | 29% | 28% |
| | Third dispersion treatment step | Media-type dispersing machine (Mugen Flow, pilot-scale equipment) | | 0.1 | 10 | 14 | 92 | 62 | 90 | 148 | 171 | 340 | 1 | 29 | 20% | 29% | 28% |
| Example 7 | First dispersion treatment step | Media-type dispersing machine (Mugen Flow, pilot-scale equipment) | #960 | 1 | 5 | 13.5 | 108 | 67 | 100 | 169 | 196 | 11500 | 600 | 49 | 20% | 29% | 28% |
| | Second dispersion treatment step | Media-type dispersing machine (Mugen Flow → pilot-scale equipment) | | 0.3 | 24 | 14 | 102 | 63 | 95 | 162 | 188 | 2060 | 8 | 35 | 20% | 29% | 28% |
| | Third dispersion treatment step | Media-type dispersing machine (Mugen Flow → pilot-scale equipment) | | 0.1 | 10 | 14 | 99 | 62 | 91 | 155 | 181 | 380 | 2 | 26 | 20% | 29% | 28% |
| Comparative Example 1 | First dispersion treatment step | Rotor-stator-type treatment machine (magicLAB (DR), laboratory-scale equipment) | #960 | - | 0.17 | 34 | 112 | 67 | 112 | 197 | 231 | 11000 | 1000 | 28 | 20% | 29% | 35% |
| | Second dispersion treatment step | High-pressure homogenizer (SB10, pilot-scale equipment) | | - | - | - | 107 | 64 | 99 | 169 | 197 | 2700 | 500 | 6 | 13% | 19% | 18% |
| Comparative Example 2 | First dispersion treatment step | Rotor-stator-type treatment machine (magicLAB (DR), laboratory-scale equipment) | #960 | - | 0.17 | 34 | 112 | 67 | 112 | 197 | 231 | 11000 | 1000 | 28 | 20% | 29% | 28% |
| | Second dispersion treatment step | High-pressure homogenizer (SBmini, laboratory-scale equipment) | | - | - | - | 110 | 59 | 94 | 192 | 234 | 5000 | 600 | 6 | 13% | 19% | 18% |

As presented in Tables 1 and 2, in Examples 1 to 7, when the first dispersion treatment step in the method for producing a pigment composition was a step conducted by a rotor-stator-type treatment machine or a media-type dispersing machine in a circulation operation or a pass operation, and the second dispersion treatment step was a step conducted by a media-type dispersing machine using beads having a bead size from 0.01 to 0.5 mm, it was found that, upon completion of the second dispersion treatment step, the pigment concentration of the pigment composition, relative to the total mass of the pigment composition, was 20 mass%. In addition, after the completion of the second dispersion treatment step, the number of coarse particles of the pigment composition having a particle size of more than 0.5 µm was 2060 × 10⁶ particles/mL or less, and the number of coarse particles of the pigment composition having a particle size of more than 1.0 µm was 18 × 10⁶ particles/mL or less, and it was found that the number of coarse particles in the pigment composition can be efficiently reduced while reducing the work load.

On the other hand, in Comparative Example 1, when a high-pressure homogenizer (oblique collision chamber) was used in the second dispersion treatment step, it was found that, upon completion of the second dispersion treatment step, the pigment concentration of the pigment composition was, relative to the total mass of the pigment composition, 13 mass%, which was lower than any of Examples 1 to 7. In addition, the number of coarse particles of the pigment composition having a particle size of more than 0.5 µm was 2700 × 10⁶ particles/mL, the number of coarse particles of the pigment composition having a particle size of more than 1.0 µm was 500 × 10⁶ particles/mL, and the number of coarse particles in the pigment composition was larger than that in any of Examples 1 to 7.

In Comparative Example 2, when a high-pressure homogenizer (ball collision chamber) was used in the second dispersion treatment step, it was found that, upon completion of the second dispersion treatment step, the pigment concentration of the pigment composition was, relative to the total mass of the pigment composition, 13 mass%, which was lower than any of Examples 1 to 7. In addition, the number of coarse particles of the pigment composition having a particle size of more than 0.5 µm was 5000 × 10⁶ particles/mL, the number of coarse particles of the pigment composition having a particle size of more than 1.0 µm was 600 × 10⁶ particles/mL, and as in Comparative Example 1, the number of coarse particles in the pigment composition was larger than that in any of Examples 1 to 7.

### Reference Signs List

10...Central shaft, 20... Rotor, 22...Blade portion, 22a...Opening, 24...Connection portion, 30...Stator, 32...Wall portion, 32a...Opening, 34...Connection portion, 100...Rotor-stator-type treatment machine, F1, F2...Flow path

## Claims

1. A method for producing a pigment composition containing carbon black, a resin having an acid value, and an aqueous medium,
the method comprising, at least, a first dispersion treatment step and a second dispersion treatment step in this order,
wherein the first dispersion treatment step is a step of conducting dispersion in a circulation operation or a pass operation,
the second dispersion treatment step is a step conducted by a media-type dispersing machine,
a bead size of beads used in the second dispersion treatment step is from 0.01 to 0.5 mm, and
upon completion of the second dispersion treatment step, a pigment concentration of the pigment composition is, relative to a total mass of the pigment composition, from 16 to 32 mass%.

2. The method for producing a pigment composition according to claim 1, the method further comprising, after the second dispersion treatment step, a third dispersion treatment step, the third dispersion treatment step being a step conducted by a media-type dispersing machine.

3. The method for producing a pigment composition according to claim 1, wherein the first dispersion treatment step is a step conducted by a rotor-stator-type treatment machine.

4. The method for producing a pigment composition according to claim 1, wherein the pigment composition further contains an anti-foaming agent.

5. A pigment composition produced by the method according to any one of claims 1 to 4.

6. An ink, comprising the pigment composition according to claim 5.

7. A printed material, comprising the ink according to claim 6.
